# EUROPÄISCHE PATENTSCHRIFT

(11) **EP 4 639 103 B1**
(45) Veröffentlichungstag und Bekanntmachung des Hinweises auf die Patenterteilung: **11.11.2026**
(21) Anmeldenummer: 23833628.3
(22) Anmeldetag: 13.12.2023
(51) Int. Cl.: G01F 1/84, G01F 25/10

(54) **MODULARES MESSSYSTEM ZUM MESSEN EINER MESSGRÖSSE EINES FLUIDEN MESSSTOFFES UND VERFAHREN ZUM INBETRIEBNEHMEN UND/ODER ÜBERPRÜFEN EINES MODULAREN MESSSYSTEMS**
MODULAR MEASUREMENT SYSTEM FOR MEASURING A MEASUREMENT VARIABLE OF A FLUID MEDIUM, AND METHOD FOR OPERATING AND/OR VERIFYING A MODULAR MEASUREMENT SYSTEM
SYSTÈME DE MESURE MODULAIRE POUR MESURER UNE GRANDEUR DE MESURE D'UNE SUBSTANCE FLUIDE À MESURER ET PROCÉDÉ DE MISE EN SERVICE ET/OU DE VÉRIFICATION (CONTRÔLE) D'UN SYSTÈME DE MESURE MODULAIRE

(30) Priorität: 20.12.2022 DE 102022134037; 31.03.2023 DE 102023108373
(43) Veröffentlichungstag der Anmeldung: 29.10.2025
(73) Patentinhaber: Endress+Hauser Flowtec AG, 4153 Reinach (CH)
(72) Erfinder: SCHWENTER, Benjamin, 4107 Ettingen (CH); WERNER, Marc, 79639 Grenzach-Wyhlen (DE); BREDA, Peppino, 4410 Liestal (CH); KIRST, Michael, 79540 Lörrach (DE); PENNER, Paul, 32052 Herford (DE)
(74) Vertreter: Endress + Hauser Group Services (Deutschland) AG+Co. KG
(86) Internationale Anmeldenummer: PCT/EP2023/085597
(87) Internationale Veröffentlichungsnummer: WO 2024/132777

(56) Entgegenhaltungen:
- WO-A1-2019/017891
- WO-A1-2021/223989
- DE-A1- 102008 022 373
- DE-A1- 102019 134 606
- DE-A1- 102020 118 702
- DE-A1- 102020 127 382
- DE-A1- 102020 133 566

## Beschreibung

Die Erfindung betrifft ein modulares Messsystem, insbesondere ein Coriolis-Massestrom-Messgeräts und ein Verfahren zum Inbetriebnehmen und/oder (Über-)Prüfen eines vibronischen Messsystems, insb. eines modularen Coriolis-Massestrom-Messgeräts.

Aus der WO 2019/017891 A1 oder der WO 2021/121867 A2 wie auch den deutschen Patentanmeldungen DE 102021105397 A1, DE 102020133614 A1, DE 102020132685 A1, DE 102020133851 A1, DE 102020133566 A1, DE 102020132986 A1, DE 102020132686 A1, DE 102020132685 A1, DE 102020131452 A1, DE 102020132223 A1, DE 102020127356 A1, DE 102020114519 A1bzw. DE 102020112154 A1 sind jeweils modulare, nämlich mittels eines Basis-Modul, eines mechanisch mit dem Basis-Modul verbundenen Vibronik-Moduls sowie einer an das Basis-Modul elektrisch angeschlossenen Messsystem-Elektronik gebildete und dem Erfassen wenigstens einer Messgröße eines in einer (Messstoff-) Leitung strömenden fluiden Messstoffs, nämlich dem Ermitteln von Messwerte für eine oder mehrere Messgrößen, beispielsweise einen Massestrom, einen Volumenstrom, eine Dichte und/oder eine Viskosität, des Messstoffs dienliche (modulare) vibronische Messsysteme bekannt.

Das Basis-Modul eines solchen (modularen) vibronischen Messsystems weist ein (Schutz-)Gehäuse mit wenigstens einer von einer Gehäusewand zumindest teilweise umhüllten Kammer sowie eine oder mehrere, beispielsweise zylindrische und/oder als Luftspule ausgebildete, elektrische Spulen, die (voneinander beabstandet) innerhalb der Kammer des (Schutz-)Gehäuses platziert und mit der Gehäusewand zumindest mittelbar mechanisch verbunden sind, auf. Jede der Spulen ist zudem elektrisch an die Messsystem-Elektronik angeschlossen. Die Messsystem-Elektronik kann zumindest teilweise innerhalb des (Schutz-)Gehäuses und/oder zumindest teilweise außerhalb des (Schutz-)Gehäuses, beispielsweise nämlich in einem separaten Elektronik-Gehäuse untergebracht sein. Das Basis-Modul ist im Besonderen auch dafür eingerichtet, das Vibronik-Modul des Messsystems aufzunehmen und damit (unter Bildung eines Messwandlers vom Vibrationstyp) mechanisch fest, gleichwohl wieder lösbar verbunden zu werden, insb. nämlich unter Bildung des vibronischen Messsystems selbst; dies insb. auch in der Weise, dass das Vibronik-Modul im des Basis-Moduls arretiert ist bzw. nicht beweglich ist.

Das Vibronik-Modul des jeweiligen Messsystems wiederum ist zudem austauschbar ausgebildet, derart, dass es, insb. auch vor Ort, von außerhalb des (Schutz-)Gehäuses des Basis-Moduls bzw. durch eine in dessen Gehäusewand vorgesehene (Einschub-)Öffnung des Gehäuses in die Kammer eingebracht werden kann und dass es zerstörungsfrei, ggf. auch werkzeuglos aus dem Basis-Modul wieder ausgebaut werden kann, insb. nämlich von außerhalb des Gehäuses und/oder durch die (Einschub-)Öffnung des Gehäuses herausnehmbar ist bzw. ohne dass dafür das Basis-Modul selbst hantiert bzw. aus der (Prozess-)Anlage ausgebaut werden müsste. Dadurch wird es u.a. auch ermöglicht, ein Vibronik-Modul nachträglich vor Ort, nämlich in ein bereits installiertes Basis-Modul einzusetzen bzw. ein defektes oder verschlissenes Vibronik-Modul vor Ort gegen ein intaktes neues, ggf. auch nur einmalig bzw. nur für einen vorgegebenen Zeitraum zu gebrauchendes ("disposable"), Vibronik-Modul vor Ort auszutauschen. Das Vibronik-Modul weist des Weiteren jeweils einen oder mehrere, beispielsweise zylindrischen, Permanentmagneten auf und ist zudem dafür eingerichtet, so in das Basis-Modul eingebaut zu werden, dass jeder der Permanentmagnete innerhalb der vorbezeichneten Kammer platziert, gleichwohl jeweils von der Gehäusewand beabstandet ist, dies im Besonderen in der Weise, dass jeder der Permanentmagnete in einer bezüglich einer Ausrichtung und/oder eines kleinsten Abstandes zu einer der elektrischen Spulen des Basis-Moduls jeweils vorgegebenen statischen Einbauposition gehalten ist und dass eine jeweilige gedachte Längsachse jedes der Permanentmagnete und eine gedachte Längsachse zumindest einer der elektrischen Spulen miteinander fluchten bzw. in Verlängerung zueinander parallel verlaufen.

Bei den in Rede stehenden Messsystemen weist jedes Vibronik-Modul ferner wenigstens ein, beispielsweise zumindest abschnittsweise gerades und/oder zumindest abschnittsweise gebogenes, (Mess-)Rohr mit einer eine äußere Mantelfläche des Rohrs bildenden Rohrwandung, insb. aus einem Metall oder einem Kunststoff, und mit einem von nämlicher Rohrwandung umhüllten Lumen, insb. nämlich zwei im Wesentlichen baugleiche parallele (Mess-)Rohre, auf und ist jeder der vorbezeichneten Permanentmagnete außen an der Rohrwandung, insb. nämlich an einem sich zwischen einem ersten Segment-Ende und einem davon entfernten zweiten Segment-Ende erstreckenden Mittel-Segment der Rohrwandung, fixiert, insb. nämlich stoffschlüssig mit der Rohrwandung verbunden. Zudem ist das Vibronik-Modul bzw. dessen wenigstens eines (Mess-)Rohr so ausgestaltet, ggf. auch werkzeuglos so in das Gehäuse eingebaut zu werden, dass das Rohr zumindest teilweise, insb. vollständig, innerhalb der Kammer platziert, gleichwohl von der Gehäusewand beabstandet ist und dass jeder der Permanentmagnete in der jeweiligen Einbauposition zusammen mit der jeweiligen elektrischen Spule eine, insb. als elektrodynamischer Schwingungserreger dienliche, Schwingspule und/oder eine, insb. als elektrodynamischer Schwingungssensor dienliche, Tauchspule bilden. Im Falle eines zumindest abschnittsweise gebogenen (Mess-)Rohrs kann das vorbezeichnete Mittel-Segment beispielsweise im wesentlichen U-förmig oder V-förmig ausgebildet sein. In einem solchen vibronischen Messsystem ist jedes der vorbezeichneten (Mess-)Rohre zudem jeweils eingerichtet, im Betrieb innerhalb des Lumens einen, insb. mit einer vorgebbaren und/oder vom ersten Segment-Ende zum zweiten Segment-Ende weisenden Strömungsrichtung, strömenden fluiden Messstoff zu führen und währenddessen vibrieren gelassen zu werden, um mit einer oder mehreren Messgrößen des Messstoffs korrelierte Messeffekte zu generieren, insb. derart, dass das Mittel-Segment Schwingungsbewegungen um eine statische Ruhelage ausführt und/oder dass das (Mess-)Rohr mittels wenigstens einer der vorbezeichneten, (bestromten) Schwingspulen angetrieben wird und/oder dass mittels der vorbezeichneten Tauchspulen jeweils eine Schwingungsbewegungen des wenigstens einen Rohrs repräsentierende, mithin als Schwingungssignal dienliche (Mess-)Spannung generiert wird. Die Messsystem-Elektronik eines solchen Messsystems wiederum ist dementsprechend dafür eingerichtet, mittels eines elektrischen Treibersignals, insb. mit einem eingeprägten Wechselstrom und/oder einer im Wesentlichen einer Resonanzfrequenz des wenigstens Rohrs entsprechenden eingeprägten (Wechselstrom-)Frequenz, elektrische Leistung in die die vorbezeichnete Schwingspule bildenden wenigstens eine elektrische Spule einzuspeisen und/oder anhand der von der die vorbezeichnete Tauchspule bildenden wenigstens einen elektrischen Spule generierten (Mess-)Spannung Messwerte für die eine oder mehrere zu erfassenden Messgrößen des durch das (Mess-)Rohr bzw. die Rohre strömenden Messstoffs zu ermitteln, im Falle eines als Coriolis-Massedurchfluss-Messgerät bzw. als Coriolis-Massedurchfluss-/Dichte-Messgerät ausgebildeten Messsystems beispielsweise nämlich anhand einer durch Corioliskräfte im durch das schwingende Rohr strömenden Messstoff bewirkten (Mess-)Phasendifferenz zwischen zwei der vorbezeichneten Schwingungssignalen sowie einer in der Messsystem-Elektronik eingerichteten Phasendifferenz-zu-Messwert-Kennlinienfunktion den Massenstrom repräsentierende (Massenstrom-)Messwerte zu generieren. Bei der Phasendifferenz-zu-Massenstrom-Messwert-Kennlinienfunktion kann sich beispielsweise um eine (lineare) Parameterfunktion mit einem (Skalen-)Nullpunkt, der einer bei ruhendem Messstoff bzw. einem Massestrom von Null Messbaren (Mess-)Phasendifferenz der beiden Schwingungssignale entspricht, und mit einer Steigung, die einer (Mess-)Empfindlichkeit des Messsystems bzw. einer auf eine Änderung des Massenstroms bezogene Änderung der (Mess-)Phasendifferenz entspricht, handeln. Da eine oder mehrere Resonanzfrequenzen des wenigstens einen Rohrs insbesondere auch von der momentanen Dichte des jeweiligen Messstoffs abhängig sind, kann mittels eines solchen Messsystems neben dem Massestrom zusätzlich auch die Dichte vom jeweils hindurch strömenden Messstoff anhand der (Wechselstrom-)Frequenz des Treibersignals und/oder anhand einer (Signal-)Frequenz wenigstens eines der Schwingungssignale direkt gemessen werden. Dementsprechend ist die Messsystem-Elektronik von Messsystemen der in Rede stehenden Art typischerweise ferner auch eingerichtet, anhand der vorbezeichneten (Wechselstrom-)Frequenz des Treibersignals und/oder anhand einer dementsprechenden Signalfrequenz wenigstens eines der Schwingungssignale die Dichte repräsentierende (Dichte-)Messwerte zu generieren, beispielsweise unter Verwendung einer in der Messsystem-Elektronik entsprechend eingerichteten Nutzfrequenz-zu-Messwert-Kennlinienfunktion. Darüber hinaus ist es auch möglich, mittels vibronischer Messsysteme der in Rede stehenden Art die Viskosität des hindurchströmenden Messstoffs direkt zu messen, beispielsweise basierend auf einer für die Aufrechterhaltung der Nutzschwingungen erforderlichen Erregerenergie bzw. Erregerleistung und/oder basierend auf einer aus einer Dissipation von Schwingungsenergie resultierenden Dämpfung der angeregten (Resonanz-)Schwingungen bzw. unter Verwendung einer in der Messsystem-Elektronik entsprechend eingerichteten Dämpfung-zu-Messwert-Kennlinienfunktion. Darüber hinaus können aus den vorgenannten Strömungs- und/oder Stoffparametern weitere abgeleitete Messgrößen, wie etwa die Reynoldszahl mittels solcher vibronischer Messsysteme ohne weiteres ermittelt werden.

Zur Vereinfachung der Inbetriebnahme eines so gebildeten Messsystems kann das Vibronik-Modul ferner wenigstens ein das Vibronik-Modul betreffende bzw. identifizierende Informationen tragendes Identifizierelement, beispielsweise ein am wenigstens einen Rohr angebrachtes Barcode-, QR-Code- bzw. Funk-Etikett (RFID-TAG), aufweisen und/oder kann das Basis-Modul wenigstens ein innerhalb des (Schutz-)Gehäuses positioniertes und an die Messsystem-Elektronik angeschlossenes Licht emittierendes Halbleiterelement, beispielsweise eine Leuchtdiode (LED), und/oder einen oder mehrere, jeweils innerhalb des (Schutz-)Gehäuses positionierte und an die Messsystem-Elektronik angeschlossene Funk-Sender/Empfänger (RF-Transceiver) und/oder Fotosensoren, beispielsweise nämlich einen oder mehrere CCD-Fotosensoren und/oder einen oder mehrere CMOS-Fotosensoren, aufweisen.

Vibronische Messsysteme der in Rede stehenden Art sind regelmäßig auch auf deren Funktionstüchtigkeit bzw. allfällige Abweichungen von einem jeweiligen vorab ermittelten, beispielsweise nämlich im vom Hersteller bzw. im Herstellerwerk festgelegten und/oder bei einer bei einer Kalibrierung bzw. Inbetriebnahme des jeweiligen Messsystems vor Ort festgestellten Referenzzustand hin zu überprüfen, beispielsweise um mit erhöhten Abweichungen vom Referenzzustand einhergehende Reduzierungen der Funktionstüchtigkeit bzw. einer Messgenauigkeit des Messsystems, mit der dieses die zu erfassenden Messgröße, nicht zuletzt auch den Massenstrom und die Dichte, in die entsprechenden Messwerte schlussendlich abbildet, möglichst frühzeitig detektieren können. Derartige Reduzierungen der Funktionstüchtigkeit bzw. Messgenauigkeit eines solchen Messsystems können beispielsweise in Form von zumeist irreversiblen Veränderungen einer elektrische Impedanz der vorbezeichneten Schwing- und/oder Tauchspulen und/oder einer dauerhaft verminderten Stabilität der mechanischen Verbindung zwischen Basis- und Vibronik-Modul bzw. einer Präzision der Positionierung des Vibronik-Moduls im Basis-Modul auftreten bzw. können beispielsweise durch thermische und/oder mechanische Überbelastungen, etwa infolge von sehr hohen oder sehr niedrigen Temperaturen innerhalb des Basis-Moduls, durch Alterung, durch innerhalb des Basis-Modul auftretende erhöhte bzw. kondensierende Feuchtigkeit und/oder durch häufiges Auswechseln von Vibronik-Modulen bedingten Verschleiß von Komponenten des Basis-Moduls verursacht sein. Als weitere, die Funktionstüchtigkeit des Messsystems zumindest indirekt und/oder zumindest vorübergehend beeinträchtigende Einflussfaktoren sind Darüber hinaus auch sich innerhalb des Basis-Moduls ausbreitende multi- und/oder hoch-frequente elektromagnetische (Fremd-)Strahlungen bzw. -felder (EMV) oder sich innerhalb des Basis-Moduls, beispielsweise in Form von Körperschall, ausbreitende (Fremd-)Schallwellen zu nennen.

Infolgedessen ist regelmäßig davon auszugehen, dass auch eine oder mehrere von dem Messsystem jeweils immanenten Systemfunktionen (Übertragungsfunktionen), von denen jede jeweils eine funktionelle Abhängigkeit der vorbezeichneten Schwingungssignale vom jeweiligen Treibersignal bzw. eine oder mehrere funktionelle Abhängigkeiten der Schwingungssignale von dem Treibersignal und den jeweiligen Strömungs- und/oder Stoffparametern des Messstoffs, charakterisiert, im Vergleich zu einer dem jeweiligen ursprünglichen Messwandler immanenten (Referenz-)Systemfunktion verändert ist. Als Beispiel für derartige Systemfunktionen des Messsystems ist u.a. eine Massenstrom-zu-Phasendifferenz-Systemfunktion, gemäß der die vorbezeichnete (Mess-)Phasendifferenz der Schwingungssignale vom Massenstrom abhängig ist, oder eine Dichte-zu-Resonanzfrequenz-Systemfunktion des Messwandlers, gemäß der eine oder mehrere Resonanzfrequenzen des wenigstens einen Rohrs von der Dichte des Messstoffs abhängig sind, zu nennen. Gleichermaßen betroffen von solchen (Über-)Belastungen des Messwandlers sind dementsprechend auch die vorbezeichneten Systemfunktionen involvierende Messfunktionen des Messsystems, gemäß der das Messsystem insgesamt die jeweils zu erfassenden Messgröße in die jeweiligen Messwerte konvertiert, beispielsweise eine aus der vorbezeichneten Massenstrom-zu-Phasendifferenz-Systemfunktion und einer Phasendifferenz-zu-Massenstrom-Messwert-Kennlinienfunktion, nämlich einer in der Messsystem-Elektronik implementierten Kennlinienfunktion, gemäß der damit eine ermittelte Phasendifferenz in Massenstrom-Messwerte umgerechnet werden, zusammengesetzte Massenstrom-zu-Messwert-Messfunktion des Messsystems, gemäß der damit ermittelte Massenstrom-Messwerte vom Massenstrom abhängig sind. Bei der Phasendifferenz-zu-Massenstrom-Messwert-Kennlinienfunktion kann sich beispielsweise um eine (lineare) Parameterfunktion mit einem einer bei ruhendem Messstoff gemessenen (Mess-)Phasendifferenz entsprechenden (Skalen-)Nullpunkt und einer (Mess-)Empfindlichkeit, die einer auf eine Änderung des Massenstroms bezogene Änderung der (Mess-)Phasendifferenz entspricht (Steigung der Kennlinienfunktion), handeln. Als weitere Beispiele für solche, potentiell ebenfalls von Störungen betroffenen Systemfunktionen bzw. damit gebildete Messfunktionen können u.a. auch eine Dichte-zu-Resonanzfrequenz- Systemfunktion des Messwandlers bzw. eine diese sowie eine Resonanzfrequenz-zu-Dichte-Messwert-Kennlinienfunktion der Messsystem-Elektronik involvierende Dichte-zu-Messwert-(Mess-)Funktion des Messsystems und/oder eine Viskosität-zu-Dämpfung-Systemfunktion des Messwandlers bzw. eine dies sowie eine Dämpfung-zu Viskosität-Messwert-Kennlinienfunktion der Messsystem-Elektronik involvierende Viskosität-zu-Messwert-(Mess-)Funktion des Messsystems genannt werden. Die Änderung der jeweiligen Systemfunktion kann sich dementsprechend beispielsweise als eine Drift eines oder mehrerer der jeweiligen Kennlinienparameter eine oder mehrerer der vorbezeichneten Kennlinienfunktionen, im Falle einer linearen Parameterfunktion beispielsweise von deren Nullpunkt und/oder deren Steigung, auswirken. Die vorbezeichneten, ggf. auch irreversiblen Änderungen einer oder mehrerer der System- bzw. Messfunktionen des Messsystems können gelegentlich auch dazu führen, dass das Messsystem insgesamt soweit fehlerhaft arbeitet, dass eine für solche typischerweise Messsysteme angestrebte hohe Messgenauigkeit nicht mehr gewährleistet ist, mithin eine Funktionstüchtigkeit des Messsystems in erheblichem Maße beeinträchtigt, ggf. sogar ausgesetzt ist bzw. eine dementsprechend kritische Störung des betroffenen Messsystems vorliegt.

Dem Rechnung tragend werden Messsysteme der in Rede stehenden Art typischerweise entsprechenden (Nach-)Prüfungen unterzogen, beispielsweise regelmäßig wiederkehrend im Zuge einer turnusmäßigen vorausschauenden Instandhaltung; dies insb. auch derart, dass vor Ort die Funktionsfähigkeit des Vibronik-Moduls bzw. des gesamten Messsystems im Zuge einer zeitgesteuert durchgeführten und/oder durch an die Messsystem-Elektronik übermittelte dementsprechend Steuerkommandos ausgelösten (Selbst-)Diagnose mittels des Messsystems überprüft wird, etwa um bei Bedarf, nicht zuletzt nämlich bei Detektion des Vorliegens einer Störung des Messsystems möglichst rasch entsprechende Reparatur- bzw. Ersatzmaßnahmen einleiten zu können. Bei einem vibronischen Messsystem der in Rede stehenden Art umfasst eine solche (Reparatur- bzw. Ersatz-)Maßnahme regelmäßig einen auch vor Ort einfach und schnell durchzuführenden Austausch des defekten Vibronik-Moduls gegen ein neues Vibronik-Modul. Ein Nachteil bei einem derartigen Prüfverfahren ist u.a. allerdings darin zu sehen, dass damit lediglich die Funktionsfähigkeit des Messsystems insgesamt verifizierbar ist bzw. dass umgekehrt eine allfällig detektierte Störung nicht ohne weiteres innerhalb des Messsystems exakt lokalisiert, nämlich dem Basis-Modul, dem Vibronik-Modul oder der Messsystem-Elektronik entsprechend zugeordnet werden kann. Im Besonderen ist es mit einer derartigen (Selbst-)Diagnose nicht ohne weiteres möglich, auch lediglich die Messgenauigkeit beeinträchtigende Störungen des Basis-Moduls bzw. der daran elektrisch angeschlossenen Messsystem-Elektronik entsprechend zu identifizieren, derart, dass im Zuge einer solchen Überprüfung eines Messsystems der in Rede stehenden Art auch ein Bedarf eines Austausches des Basis-Moduls und/oder der Messsystem-Elektronik ermittelt werden kann.

Ausgehend vom vorbezeichneten Stand der Technik besteht eine Aufgabe der Erfindung darin, die Überprüfung von modularen vibronischen Messsystemen dahingehend zu verbessern, dass damit allfällige Störungen bzw. Defekte des Basis-Moduls und/oder der Messsystem-Elektronik, nicht zuletzt auch von die Messgenauigkeit des Messsystems insgesamt herabsetzenden Verschleiß- bzw. Alterungserscheinungen des Basis-Moduls bzw. der Messsystem-Elektronik, möglichst frühzeitig und zuverlässig detektiert, ggf. auch vermeldet werden können.

Die Aufgabe wird gelöst durch das erfindungsgemäße Modulares Messystem, insbesondere Coriolis-Massestrom-Messgerät, zum Messen einer Messgröße eines fluiden Messstoffes, welches Messsystem umfasst:
- eine Messsystem-Elektronik (ME);
- ein Basis-Modul (M1), welches Basis-Modul (M1) aufweist:
   -- ein (Schutz-)Gehäuse mit wenigstens einer von einer Gehäusewand zumindest teilweise umhüllten Kammer,
   -- eine wenigstens eine, insb. innerhalb der Kammer des (Schutz-)Gehäuses platzierte, insb. zylindrische und/oder als Luftspule ausgebildete, erste elektrische Spule , die mit der Gehäusewand zumindest mittelbar mechanisch verbunden sowie elektrisch an die Messsystem-Elektronik (ME) angeschlossen ist, und
   -- wenigstens eine, insb. innerhalb der Kammer des (Schutz-)Gehäuses platzierte, insb. zylindrische und/oder als Luftspule ausgebildete und/oder zur ersten elektrische Spule baugleiche, zweite elektrische Spule , die, insb. entfernt von der ersten elektrischen Spule positioniert und mit der Gehäusewand zumindest mittelbar mechanisch verbunden ist, welche elektrisch an die Messsystem Elektronik (ME) angeschlossen ist;
- **wobei** das Basis-Modul (M1) eingerichtet ist, ein Vibronik-Modul (M2) des Messsystems, insbesondere in die Kammer , aufzunehmen und damit mechanisch fest, gleichwohl wieder lösbar verbunden zu werden, insb. nämlich unter Bildung eines Messaufnehmers vom Vibrationstyp bzw. eines vibronischen Messsystems und/oder derart, dass das Vibronik-Modul (M2) im Basis-Modul (M1) arretiert ist bzw. nicht beweglich ist, und
- **wobei** die Messsystem-Elektronik (ME) dazu eingerichtet ist, in einem Messmodus bei Anwesenheit des Vibronik-Moduls (M2) in der Kammer ein (Mess-)Treibersignal in die erste elektrische Spule einzuspeisen zum Anregen von Vibrationen des Vibronik-Moduls (M2) als auch eine durch Vibrationen des Vibronik-Moduls ( M2) in die zweite elektrische Spule induzierte, elektrische (Mess-)Spannung von der zweiten elektrischen Spule zu erfassen und auszuwerten, insbesondere Messwerten für die mindestens eine Messgröße zu ermitteln,
- **und wobei** die Messsystem-Elektronik (ME) dazu eingerichtet ist, in einem Prüfmodus bei Abwesenheit des Vibronik-Moduls (M2) in der Kammer , insbesondere auch bei Abwesenheit weiterer mobiler, nämlich nicht zum Basis-Modul (M1) gehöriger magnetfelderzeugender Vorrichtungen, eine Überprüfung, insbesondere eine (Re-)Kalibrierung, des Basis-Moduls (M1) und/oder der Messsystem-Elektronik (ME) durchzuführen, nämlich bei Abwesenheit des Vibronik-Moduls (M2), sowohl ein (erstes) (Prüf-)Treibersignal in die erste elektrische Spule einzuspeisen als auch eine, insb. induktiv von der ersten elektrischen Spule in die zweite elektrische Spule eingekoppelte, elektrische (Prüf-)Spannung von der zweiten elektrischen Spule zu erfassen und auszuwerten, insbesondere wenigstens einen Parameter der (Prüf-)Spannung, insbesondere eine Amplitude und/oder eine Frequenz und/oder einen Phasenwinkel und/oder einen Messwert einer Induktivität, mit einem vorabermittelten Referenzwert und/oder mit einem vorgegebenen Schwellenwert zu vergleichen.

Im Prüfmodus ist weder ein Vibronik-Modul und noch ein Prüfmodul gemäß einer der (nicht vorveröffentlichten) DE 102021126587.8, DE 102022134029.5 bzw. DE 102022100234.9 oder andere externe magnetfelderzeugende Vorrichtungen, die nicht Teil des Basis-Moduls oder der Messsytem-Elektronik sind, in der Kammer des Basis-Moduls angeordnet.

Eine Ausgestaltung sieht vor, dass die Messsystem-Elektronik eingerichtet ist, mittels des elektrischen (Messsystem-) Treibersignals und/oder des (ersten) (Prüf-)Treibersignals, insb. mit einem eingeprägten Wechselstrom, elektrische Leistung in die erste elektrische Spule einzuspeisen.

Eine Ausgestaltung sieht vor, dass die Messsystem-Elektronik (ME) dazu eingerichtet ist, das (Prüf-)Treibersignal mit mindestens zwei voneinander abweichenden Frequenzen, insbesondere mit einer Resonanzfrequenz des (Schutz-)Gehäuses, einer nominellen Resonanzfrequenz des Vibronik-Moduls (M2) und/oder einer Netzfrequenz, einzuspeisen.

Eine Ausgestaltung sieht vor, dass die Messsystem-Elektronik (ME) ebenfalls eingerichtet ist, im Prüfmodus mittels eines (zweiten) elektrischen (Prüf-)Treibersignals, insb. mit einem eingeprägten Wechselstrom, elektrische Leistung in die zweite elektrische Spule einzuspeisen.

Eine Ausgestaltung sieht vor, dass die Messsystem-Elektronik (ME) ebenfalls eingerichtet ist, im Prüfmodus eine, insb. mittels der zweiten Spule induktiv in die erste elektrische Spule eingekoppelte bzw. in der erste elektrischen Spule induzierte, elektrische (Prüf-)Spannung zu erfassen und auszuwerten, insb. nämlich unter Verwendung der (Prüf-)Spannung wenigstens einen Parameter der (Prüf-)Spannung, insb. eine Amplitude und/oder eine Frequenz und/oder einen Phasenwinkel und/oder einen Messwert einer Induktivität zu ermitteln und mit einem vorabermittelten Referenzwert und/oder mit einem vorgegebenen Schwellenwert zu vergleichen.

Eine Ausgestaltung sieht vor, dass die Messsystem-Elektronik im Prüfmodus eingerichtet ist, anhand der (Prüf-)Spannung eine Induktivität, insbesondere der ersten elektrischen Spule, zu ermitteln, insb. nämlich die ermittelte Induktivität mit einem vorab ermittelten (Induktivitäts-)Referenzwert und/oder einem oder mehreren dafür vorgegebenen Schwellenwerten zu vergleichen; und/oder die Messsystem-Elektronik eingerichtet ist, anhand der (Prüf-)Spannung, insb. digitale, Messwerte für wenigstens einen Parameter der (Prüf-)Spannung, insb. eine Amplitude, eine Frequenz und/oder einen Phasenwinkel, zu ermitteln, insb. nämlich die Messwerte mit einem vorab ermittelten Referenzwert und/oder einem oder mehreren dafür vorgegebenen Schwellenwerten zu vergleichen.

Eine Ausgestaltung sieht vor, dass das Basis-Modul wenigstens eine, insb. innerhalb der Kammer des (Schutz-)Gehäuses platzierte, insb. zylindrische und/oder als Luftspule ausgebildete und/oder zur zweiten elektrische Spule baugleiche, dritte elektrische Spule, die, insb. entfernt von der zweiten elektrischen Spule positioniert, insb. mit der Gehäusewand zumindest mittelbar mechanisch verbunden ist, aufweist; und die dritte elektrische Spule elektrisch an die Messsystem-Elektronik angeschlossen ist.

Eine Ausgestaltung sieht vor, dass die Messsystem-Elektronik im Prüfmodus eingerichtet ist, mittels eines (dritten) elektrischen (Mess-)Treibersignals, insb. mit einem eingeprägten Wechselstrom, elektrische Leistung in die dritte elektrische Spule einzuspeisen.

Eine Ausgestaltung sieht vor, dass die Messsystem-Elektronik (ME) im Prüfmodus eingerichtet ist, eine, insb. mittels der ersten elektrischen Spule und/oder der zweiten elektrischen Spule induktiv in die dritte elektrische Spule eingekoppelten bzw. in der dritten elektrischen Spule induzierten, elektrischen (Prüf-)Spannung von der dritten elektrischen Spule zu erfassen und auszuwerten, insb. nämlich unter Verwendung der (Prüf-)Spannung für wenigstens einen Parameter der (Prüf-)Spannung, insb. eine Amplitude und/oder eine Frequenz und/oder einen Phasenwinkel und/oder eine Induktivität zu ermitteln.

Eine Ausgestaltung sieht vor, dass die Messsystem-Elektronik (ME) im Prüfmodus eingerichtet ist, eine, insb. mittels der ersten elektrischen Spule induktiv in die zweite elektrische Spule und die dritte elektrische Spule eingekoppelten bzw. in der zweiten elektrischen Spule und in der dritten elektrischen Spule induzierten, elektrische (Prüf-)Spannungen zu erfassen und auszuwerten, insb. nämlich unter Verwendung der (Prüf-)Spannungen für wenigstens einen Parameter der (Prüf-)Spannungen, insb. jeweils eine Amplitude und/oder jeweils eine Frequenz und/oder jeweils einen Phasenwinkel und/oderr jeweils eine Induktivität und/oder eine Phasendifferenz zwischen der an der zweiten Spule erfassten (Prüf-)Spannung und der an der dritten Spule erfassten (Prüf- )Spannung zu ermitteln.

Eine Ausgestaltung sieht vor, dass die Messsystem-Elektronik (ME) im Prüfmodus eingerichtet ist, eine, insb. mittels der dritten elektrischen Spule induktiv in die erste elektrische Spule und/oder die zweite elektrische Spule eingekoppelten bzw. in der erste elektrischen Spule und/oder der zweiten elektrischen Spule induzierten, elektrische (Prüf-)Spannung von der ersten elektrischen Spule und/oder der zweiten elektrischen Spule zu erfassen und auszuwerten, insb. nämlich unter Verwendung der (Prüf-)Spannung für wenigstens einen Parameter der (Prüf-)Spannung, insb. eine Amplitude und/oder eine Frequenz und/oder einen Phasenwinkel und/oder eine Induktivität zu ermitteln.

Eine Ausgestaltung sieht vor, dass die Messsystem-Elektronik im Prüfmodus eingerichtet ist, das (erstes) elektrische (Mess-)Treibersignal, das (zweite) elektrische (Mess-)Treibersignal und/oder das (dritte) elektrische (Mess-)Treibersignal mit einer mechanischen Resonanzfrequenz, insb. ersten mechanischen Resonanzfrequenz und/oder zweiten mechanischen Resonanzfrequenz, des Vibronik-Moduls entsprechenden Signalfrequenz breitzustellen.

Eine Ausgestaltung sieht vor, dass das Vibronik-Modul wenigstens einen, insb. zylindrischen, ersten Permanentmagneten aufweist, wobei das Vibronik-Modul eingerichtet ist, so in das Basis-Modul eingebaut zu werden, dass dessen erster Permanentmagnet innerhalb der Kammer platziert, gleichwohl von der Gehäusewand beabstandet ist, insb. nämlich in einer bezüglich einer Ausrichtung und/oder eines kleinsten Abstandes zur ersten elektrische Spule vorgegebenen und/oder mit der statischen (ersten) Einbauposition gehalten ist und/oder derart, dass eine gedachte Längsachse des ersten Permanentmagnets und eine gedachte Längsachse der ersten elektrischen Spule miteinander fluchten bzw. in Verlängerung zueinander parallel verlaufen.

Eine Ausgestaltung sieht vor, dass die dritte elektrische Spule Teil der Messsystem-Elektronik ist

Eine Ausgestaltung sieht vor, dass die dritte elektrische Spule räumlich verschiebbar ausgestaltet ist.

Eine Ausgestaltung sieht vor, dass die Messsystem-Elektronik eingerichtet ist, Messwerte für einen Spulenstrom oder davon abhängige Größen zu ermitteln und auszuwerten, insb. einen oder mehrere (Parameter-)Messwerte für den Spulenstrom oder davon abhängige Größen mit einem vorab ermittelten (Spulenstrom-)Referenzwert und/oder einem oder mehreren dafür vorgegebenen (Spulenstrom-)Schwellenwerten zu vergleichen.

Eine Ausgestaltung sieht vor, dass die Messsystem-Elektronik eingerichtet ist, Messwerte für eine Signalstärke des (Prüf-)Treibersignals zu ermitteln und auszuwerten, insb. einen oder mehrere Messwerte für die Signalstärke des (Prüf-)Treibersignals mit einem vorab ermittelten (Signalstärke-)Referenzwert und/oder einem oder mehreren dafür vorgegebenen (Signalstärke-) Schwellenwerten zu vergleichen.

Eine Ausgestaltung sieht vor, dass die Messsystem-Elektronik eingerichtet ist, einen zeitlichen Signalverlauf des Treibersignals zu ermitteln und auszuwerten.

Das erfindungsgemäß Verfahren zum Inbetriebnehmen und/oder (Über-)Prüfen eines vibronischen Messsystems, insb. eines modularen Coriolis-Massestrom-Messgeräts, umfassend:
- welches Messsystem
- ein Basis-Modul (M1), das
   -- ein (Schutz-)Gehäuse mit wenigstens einer von einer Gehäusewand zumindest teilweise umhüllten Kammer
   -- sowie wenigstens eine innerhalb der Kammer des (Schutz-)Gehäuses platzierte, insb. zylindrische und/oder als Luftspule ausgebildete, erste elektrische Spule , die mit der Gehäusewand zumindest mittelbar mechanisch verbunden sowie elektrisch an die Messsystem-Elektronik angeschlossene ist, aufweist,
- sowie ein Vibronik-Modul, insb. ein Vibronik-Modul gemäß Anspruch 13;
- wobei das Basis-Modul (M1) eingerichtet ist, das Vibronik-Modul (M2) aufzunehmen und damit mechanisch fest, gleichwohl wieder lösbar verbunden zu werden, insb. nämlich unter Bildung eines Messaufnehmers vom Vibrationstyp bzw. eines vibronischen Messsystems und/oder derart, dass das Vibronik-Modul (M2) nicht beweglich ist bzw. im Basis-Modul (M1) arretiert ist;
welches Verfahren umfasst:
- Überprüfen bzw. (Re-)Kalibrieren des Basis-Moduls (M1) und/oder der Messsystem-Elektronik (ME) während eines Prüfmodus, mittels der Messsystem-Elektronik bei Abwesenheit des Vibronik-Moduls (M2) in der Kammer , insbesondere auch bei Abwesenheit weiterer mobiler, nämlich nicht zum Basis-Modul (M1) gehöriger magnetfelderzeugender Vorrichtungen, insb. durch Einspeisen eines (ersten) (Prüf-)Treibersignals in die erste elektrische Spule und durch Erfassen und Auswerten einer, insb. induktiv von der ersten elektrischen Spule in die zweite elektrische Spule eingekoppelten, elektrischen (Prüf-)Spannung von der zweiten elektrischen Spule , insb. durch Vergleichen wenigstens eines Parameters der (Prüf-)Spannung, insbesondere eine Amplitude und/oder eine Frequenz und/oder einen Phasenwinkel und/oder einen Messwert der Selbstinduktivität, mit einem vorabermittelten Referenzwert und/oder mit einem vorgegebenen Schwellenwert;
- Einsetzen eines Vibronik-Moduls (M2), insb. eines Vibronik-Moduls gemäß Anspruch 13, in das Basis-Modul (M1) zum Bilden eines Messaufnehmers vom Vibrationstyp bzw. des vibronischen Messsystems; und
- Ermitteln von Messwerten für die mindestens eine Messgröße während des Messmodus, durch Einspeisen eines (Mess-)Treibersignals in die erste elektrische Spule zum Anregen von Vibrationen des Vibronik-Moduls (M2) und Erfassen einer durch Vibrationen des Vibronik-Moduls (M2) in die zweite elektrische Spule induzierten, elektrischen (Mess-)Spannung von der zweiten elektrischen Spule .

Nach einer Ausgestaltung ist ferner vorgesehen, dass das Basis-Modul wenigstens eine innerhalb der Kammer des (Schutz-)Gehäuses platzierte, beispielsweise zylindrische und/oder als Luftspule ausgebildete und/oder zur ersten elektrische Spule baugleiche, zweite elektrische Spule, die, insb. entfernt von der ersten elektrischen Spule positioniert, mit der Gehäusewand zumindest mittelbar mechanisch verbunden ist, aufweist, und dass die zweite elektrische Spule elektrisch an die Messsystem-Elektronik angeschlossen ist. Diese Ausgestaltung der Erfindung ist die Messsystem-Elektronik ferner eingerichtet, mittels eines elektrischen (Mess-)Treibersignals, beispielsweise mit einem eingeprägten Wechselstrom, elektrische Leistung in die erste elektrische Spule einzuspeisen und mittels eines (ersten) elektrischen (Prüf-)Treibersignals, beispielsweise mit einem eingeprägten Wechselstrom, elektrische Leistung in die zweite elektrische Spule einzuspeisen. Alternativ oder in Ergänzung kann die Messsystem-Elektronik ferner auch eingerichtet sein, eine, beispielsweise induktiv von der ersten elektrischen Spule in die zweite elektrische Spule eingekoppelte bzw. in der dritten elektrischen Spule induzierte, elektrische (Prüf-)Spannung von der zweiten elektrischen Spule bzw. von der dritten elektrischen Spule zu erfassen und auszuwerten, beispielsweise nämlich anhand der (Prüf-)Spannung (Parameter-) Messwerte für eine Amplitude und/oder eine Frequenz und/oder einen Phasenwinkel und/oder einen anderen Parameter der (Prüf-)Spannung und/oder eine Induktivität, insbesondere der ersten und/oder zweiten elektrischen Spule, und/oder Messwerte für wenigstens eine Messgröße eines strömenden Fluids zu ermitteln, und/oder kann die Messsystem-Elektronik auch eingerichtet sein, eine, beispielsweise induktiv von einer ersten elektrischen Spule des Basis-Moduls in die dritte elektrische Spule eingekoppelte bzw. in der dritten elektrischen Spule induzierte, elektrische (Prüf-)Spannung von der dritten elektrischen Spule zu erfassen und auszuwerten, beispielsweise nämlich anhand der (Prüf-)Spannung (Parameter-)Messwerte für eine Amplitude und/oder eine Frequenz und/oder einen Phasenwinkel und/oder einen anderen Parameter der (Prüf-)Spannung und/oder eine Induktivität, insbesondere der ersten und/oder dritten elektrischen Spule, und/oder Messwerte für wenigstens eine Messgröße eines strömenden Fluids zu ermitteln und/oder kann die Messsystem-Elektronik ferner auch eingerichtet sein, eine zwischen den (Prüf-)Spannungen etablierte Phasendifferenz zu ermitteln, beispielsweise um anhand dessen Messwerte für einen Massestrom und/oder eine andere Messgröße eines strömenden Fluids zu ermitteln. Darüber hinaus kann die Messsystem-Elektronik ferner eingerichtet sein, einen oder mehrere der (Parameter-)Messwerte mit einem dafür jeweils vorab ermittelten (Parameter-)Referenzwert und/oder einem oder mehreren dafür jeweils vorgegebenen Schwellenwerten zu vergleichen.

Nach einer Ausgestaltung ist das Basis-Modul eingerichtet, ein Vibronik-Modul des Messsystems aufzunehmen und damit mechanisch fest, gleichwohl wieder lösbar verbunden zu werden, beispielsweise unter Bildung eines Messaufnehmers vom Vibrationstyp bzw. eines vibronischen Messsystems und/oder derart, dass das Vibronik-Modul innerhalb des Basis-Moduls arretiert ist bzw. nicht beweglich ist. Diese Ausgestaltung der Erfindung weiterbildend ist ferner vorgesehen, dass das Basis-Modul wenigstens eine innerhalb der Kammer des (Schutz-)Gehäuses platzierte, beispielsweise zylindrische und/oder als Luftspule ausgebildete, (erste) elektrische Spule, die mit der Gehäusewand zumindest mittelbar mechanisch verbunden sowie elektrisch an die Messsystem-Elektronik angeschlossen ist, aufweist, und dass die Messsystem-Elektronik ferner eingerichtet ist, mittels eines ersten elektrischen (Mess-)Treibersignals, beispielsweise mit einem eingeprägten Wechselstrom, elektrische Leistung in die erste elektrische Spule einzuspeisen, beispielsweise nämlich das (erstes) elektrische (Mess-)Treibersignal mit einer mechanischen Resonanzfrequenz des Vibronik-Moduls entsprechenden Signalfrequenz breitzustellen, und/oder ist vorgesehen, dass das Vibronik-Modul wenigstens einen, insb. zylindrischen, ersten Permanentmagneten aufweist. Ferner kann das Vibronik-Modul zudem eingerichtet sein, so in das Basis-Modul eingebaut zu werden, dass der vorbezeichnete (erste) Permanentmagnet (des Vibronik-Moduls) innerhalb der Kammer platziert, gleichwohl von der Gehäusewand beabstandet ist, beispielsweise nämlich in einer bezüglich einer Ausrichtung und/oder eines kleinsten Abstandes zur vorbezeichneten (ersten) elektrische Spule (des Basis-Moduls) vorgegebenen und/oder mit der statischen (ersten) Einbauposition gehalten ist und/oder derart, dass eine gedachte Längsachse des (ersten) Permanentmagnets und eine gedachte Längsachse der (ersten) elektrischen Spule miteinander fluchten bzw. in Verlängerung zueinander parallel verlaufen. Erfindungsgemäß erfolgt die Kalibration jedoch in Abwesenheit des Vibronik-Moduls, d.h. das Vibronik-Modul ist zum Zeitpunkt der Kalibration nicht in der Kammer des Basis-Moduls angeordnet.

Nach einer Ausgestaltung ist das Basis-Modul eingerichtet, ein Vibronik-Modul des Messsystems aufzunehmen und damit mechanisch fest, gleichwohl wieder lösbar verbunden zu werden, beispielsweise unter Bildung eines Messaufnehmers vom Vibrationstyp bzw. eines vibronischen Messsystems und/oder derart, dass das Vibronik-Modul im Basis-Modul arretiert ist, wobei das Vibronik-Modul (des Messsystems) wenigstens ein, beispielsweise zumindest abschnittsweise gerades und/oder zumindest abschnittsweise gebogenes, (erstes) Rohr mit einer eine äußere Mantelfläche des Rohrs bildenden Rohrwandung, beispielsweise aus einem Metall oder einem Kunststoff, und mit einem von nämlicher Rohrwandung umhüllten Lumen, aufweist, und wobei das Vibronik-Modul eingerichtet ist, beispielsweise werkzeuglos, so in das (Schutz-)Gehäuse (des Basis-Moduls) eingebaut zu werden, dass das wenigstens eine Rohr zumindest teilweise bzw. vollständig innerhalb der Kammer platziert, gleichwohl von der Gehäusewand beabstandet ist. Diese Ausgestaltung der Erfindung weiterbildend ist ferner vorgesehen, dass das erste Rohr zumindest abschnittsweise U-förmig oder V-förmig ausgebildet und/oder dafür eingerichtet ist, in seinem Lumen einen, insb. mit einer vorgebbaren und/oder von einem (einlassseitigen) ersten Segment-Ende zu einem (auslassseitigen) zweiten Segment-Ende weisenden Strömungsrichtung, strömenden fluiden Messstoff zu führen und/oder den Messstoff zu führen und währenddessen vibrieren gelassen zu werden. Alternativ oder in Ergänzung kann das Vibronik-Modul des Weiteren wenigstens ein, beispielsweise zum ersten Rohr bau- und/oder funktionsgleiches, zweites Rohr mit einer eine äußere Mantelfläche des zweiten Rohrs bildenden Rohrwandung, beispielsweise aus einem Metall oder einem Kunststoff bzw. aus dem gleichen Material wie die Rohrwandung des ersten Rohrs, und mit einem von nämlicher Rohrwandung umhüllten Lumen, aufweisen, beispielsweise mit einem außen an der Rohrwandung fixierten zweiten Permanentmagneten.

Nach einer Ausgestaltung ist das Basis-Modul eingerichtet, ein Vibronik-Modul des Messsystems aufzunehmen und damit mechanisch fest, gleichwohl wieder lösbar verbunden zu werden, beispielsweise unter Bildung eines Messaufnehmers vom Vibrationstyp bzw. eines vibronischen Messsystems und/oder derart, dass das Vibronik-Modul im Basis-Moduls arretiert ist, wobei das Vibronik-Modul (des Messsystems) wenigstens ein, beispielsweise zumindest abschnittsweise gerades und/oder zumindest abschnittsweise gebogenes, (erstes) Rohr mit einer eine äußere Mantelfläche des Rohrs bildenden Rohrwandung, beispielsweise aus einem Metall oder einem Kunststoff, und mit einem von nämlicher Rohrwandung umhüllten Lumen, sowie wenigstens einen, beispielsweise zylindrischen, ersten Permanentmagneten, der außen an der Rohrwandung, beispielsweise nämlich an einem sich zwischen einem ersten Segment-Ende und einem davon entfernten zweiten Segment-Ende erstreckenden Mittel-Segment der Rohrwandung, fixiert ist, beispielsweise nämlich stoffschlüssig mit der Rohrwandung verbunden ist, aufweist, und wobei das Vibronik-Modul eingerichtet ist, beispielsweise werkzeuglos, so in das (Schutz-)Gehäuse (des Basis-Moduls) eingebaut zu werden, dass das wenigstens eine Rohr zumindest teilweise bzw. vollständig innerhalb der Kammer platziert, gleichwohl von der Gehäusewand beabstandet ist. Diese Ausgestaltung der Erfindung weiterbildend ist ferner vorgesehen, dass das Basis-Modul wenigstens eine innerhalb der Kammer des (Schutz-)Gehäuses platzierte, beispielsweise zylindrische und/oder als Luftspule ausgebildete, (erste) elektrische Spule, die mit der Gehäusewand zumindest mittelbar mechanisch verbunden sowie elektrisch an die Messsystem-Elektronik angeschlossen ist, aufweist, und/oder dass das Vibronik-Modul eingerichtet ist, so in das Basis-Modul eingebaut zu werden, dass der vorbezeichnete (erste) Permanentmagnet (des Vibronik-Moduls) innerhalb der Kammer platziert, gleichwohl von der Gehäusewand beabstandet ist, beispielsweise nämlich in einer bezüglich einer Ausrichtung und/oder eines kleinsten Abstandes zur vorbezeichneten (ersten) elektrische Spule (des Basis-Moduls) vorgegebenen und/oder mit der statischen (ersten) Einbauposition gehalten ist und/oder derart, dass eine gedachte Längsachse des (ersten) Permanentmagnets und eine gedachte Längsachse der (ersten) elektrischen Spule miteinander fluchten bzw. in Verlängerung zueinander parallel verlaufen. Beispielsweise kann der (erste) Permanentmagnet (des Vibronik-Moduls) auch eingerichtet sein, in Einbauposition zusammen mit der ersten elektrischen Spule (des Basis-Moduls) eine, insb. als elektrodynamischer Schwingungserreger dienliche, Schwingspule und/oder eine, insb. als elektrodynamischer Schwingungssensor dienliche, Tauchspule zu bilden. Ferner kann das (erste) Rohr eingerichtet sein, von einem fluiden Messstoff durchströmt und währenddessen, beispielsweise angetrieben durch einen mittels der ersten elektrischen Spule und dem ersten Permanentmagneten gebildeten Schwingungserreger, vibrieren gelassen zu werden, beispielsweise derart, dass zumindest das vorbezeichnete Mittel-Segment der Rohrwandung Schwingungsbewegungen um eine statische Ruhelage ausführt bzw. dass eine in der (ersten) elektrischen Spule induzierte (Mess-)Spannung Schwingungsbewegungen des (ersten) Rohrs repräsentiert. Anhand der ersten (Mess-) Spannung Messwerte kann die Messsystem-Elektronik beispielsweise auch Messwerte für wenigstens eine Messgröße des durch das erste Rohr strömenden Messstoffs ermitteln. Darüber hinaus kann das Vibronik-Modul ferner einen (entfernt vom ersten Permanentmagneten) am ersten Rohr, beispielsweise dessen Mittel-Segment, fixierten, insb. nämlich stoffschlüssig damit verbundenen, zweiten Permanentmagneten aufweisen.

Nach einer Ausgestaltung weist das Basis-Modul wenigstens eine innerhalb der Kammer des (Schutz-)Gehäuses platzierte, beispielsweise zylindrische und/oder als Luftspule ausgebildete und/oder zur ersten elektrische Spule baugleiche, zweite elektrische Spule, die, insb. entfernt von der ersten elektrischen Spule positioniert, mit der Gehäusewand zumindest mittelbar mechanisch verbunden ist, auf, die zweite elektrische Spule elektrisch an die Messsystem-Elektronik angeschlossen ist, und ist das Basis-Modul ferner eingerichtet, ein Vibronik-Modul des Messsystems aufzunehmen und damit mechanisch fest, gleichwohl wieder lösbar verbunden zu werden, beispielsweise unter Bildung eines Messaufnehmers vom Vibrationstyp bzw. eines vibronischen Messsystems und/oder derart, dass das Vibronik-Modul im Basis-Modul arretiert ist in das Basis-Modul eingebaut, insb. nämlich von außerhalb des Gehäuses und/oder durch eine in der Gehäusewand vorgesehene (Einschub-)Öffnung des (Schutz-)Gehäuses eingesetzt, zu werden. Diese Ausgestaltung der Erfindung weiterbildend ist ferner vorgesehen, dass das Vibronik-Modul einen, beispielsweise zylindrischen, ersten Permanentmagneten sowie wenigstens einen, beispielsweise zylindrischen und/oder zum ersten Permanentmagneten baugleichen, zweiten Permanentmagneten, beispielsweise einen zweiten Permanentmagneten und einen dritten Permanentmagneten, aufweist, Ferner kann das Vibronik-Modul zudem eingerichtet sein, so in das Basis-Modul eingebaut zu werden, dass der (erste) Permanentmagnet (des Vibronik-Moduls) innerhalb der Kammer platziert, gleichwohl von der Gehäusewand beabstandet ist, beispielsweise nämlich in einer bezüglich einer Ausrichtung und/oder eines kleinsten Abstandes zur ersten elektrischen Spule (des Basis-Moduls) vorgegebenen und/oder mit der statischen ersten Einbauposition gehalten ist, und/oder derart, dass eine gedachte Längsachse des ersten Permanentmagnets und eine gedachte Längsachse der ersten elektrischen Spule miteinander fluchten bzw. in Verlängerung zueinander parallel verlaufen und/oder kann das Vibronik-Modul zudem eingerichtet sein, so in das Basis-Modul eingebaut zu werden, dass der zweite Permanentmagnet (des Vibronik-Moduls) innerhalb der Kammer platziert, gleichwohl von der Gehäusewand beabstandet ist, beispielsweise nämlich in einer bezüglich einer Ausrichtung und/oder eines kleinsten Abstandes zur zweiten elektrischen Spule (des Basis-Moduls) vorgegebenen und/oder von der ersten Einbauposition entfernten und/oder mit der statischen zweiten Einbauposition gehalten ist, und/oder derart, dass eine gedachte Längsachse des zweiten Permanentmagnets und eine gedachte Längsachse der zweiten elektrischen Spule miteinander fluchten bzw. in Verlängerung zueinander parallel verlaufen.

Nach einer Weiterbildung des Verfahrens der Erfindung, umfasst dieses ferner ein Einbinden der Prüfanordnung in ein übergeordnetes elektronisches Datenverarbeitungssystem. Das Datenverarbeitungssystem kann beispielsweise auch mittels einer Speicherprogrammierbaren Steuerung (SPS) und/oder mittels eines Prozessleitsystems (PLS) und/oder mittels eines Edge(-Computing)-Devices und/oder mittels eines Cloud(-Computing)-Systems gebildet sein.

Der Grundgedanke der Erfindung ist das Durchführen einer Prüfung bzw. (Re-)Kalibrierung des Basis-Moduls und/oder der Messsystem-Elektronik, ohne dass das Vibronik-Modul (oder ein Prüfmodul) im Basis-Modul bzw. in der Kammer des Basis-Moduls angeordnet ist und somit Einfluss auf die (Re-)Kalibration nehmen kann. Gerade, wenn am Vibronik-Modul Defekte vorliegen, die beispielsweise beim Transport entstanden sind, kann dies zu Fehlern bei einem erstmaligen Abgleich des Basis-Moduls und/oder der Messsystem-Elektronik mit eingestecktem Vibronik-Modul führen. Es ist jedoch nicht eindeutig erkennbar, ob der Ursprung des Fehlers beim Vibronik-Modul oder beim Basis-Modul liegt. Durch die (Re-)Kalibrierung des Coriolis-Massestrom-Messgerätes, insb. des Basis-Moduls und/oder der Messsystem-Elektronik in Abwesenheit des Vibronik-Moduls lässt sich ein Messfehler eindeutig dem Basis-Modul und/oder der Messsystem-Elektronik zuordnen.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im Einzelnen zeigen:
- Fig. 1, 2: ein Ausführungsbeispiel eines Basis-Moduls, einer Messsystem-Elektronik und eines Vibronik-Moduls eines (noch zusammen zu bauenden/noch nicht zusammengebauten) modularen vibronischen Messsystems;
- Fig. 3a, 3b: in verschiedenen Seitenansichten ein Ausführungsbeispiel des modularen vibronischen Messsystems gemäß Fig. 1;
- Fig. 4: ein Ausführungsbeispiel eines Basis-Moduls einer Messsystem-Elektronik.

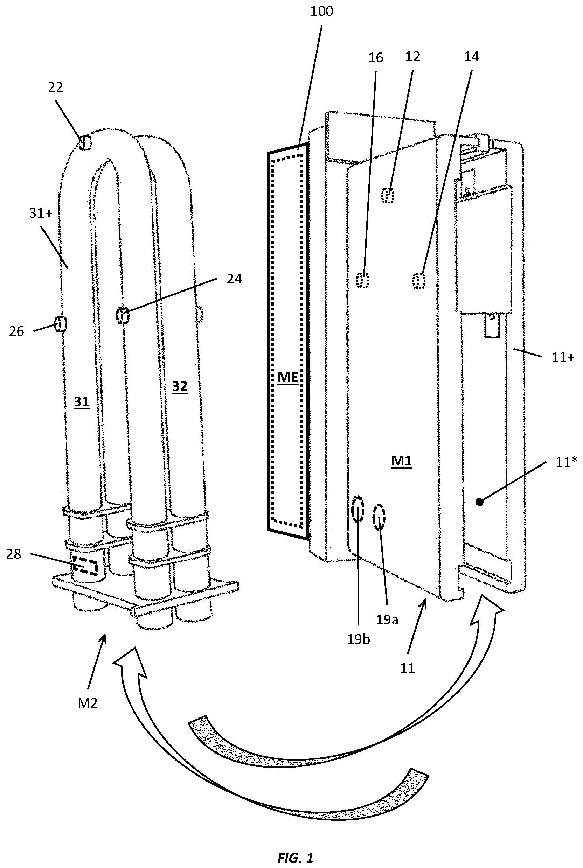

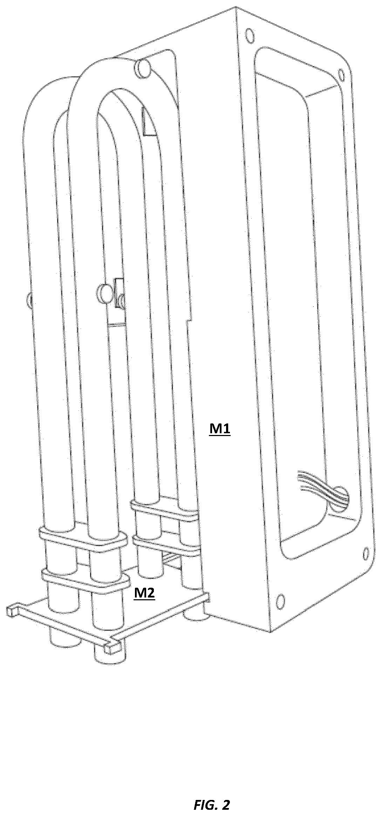

In den Fig. 1, 2, 3a und 3b ist schematisch ein Ausführungsbeispiel eines (modularen) vibronischen Messsystems gezeigt, das im Besonderen dafür vorgesehen ist, wenigstens eine Messgröße eines in einer (Messstoff-)Leitung strömenden fluiden Messstoffs zu erfassen, nämlich Messwerte für eine oder mehrere Messgrößen, beispielsweise einen Massestrom, einen Volumenstrom, eine Dichte und/oder eine Viskosität, des Messstoffs zu ermitteln. Das Messsystem umfasst dafür ein Basis-Modul M1, ein Vibronik-Modul M2 sowie eine, beispielsweise programmierbare, Messsystem-Elektronik ME.

Die Messsystem-Elektronik ME kann beispielsweise mittels eines oder mehreren Mikroprozessoren (µC) gebildet sein und/oder ein, beispielsweise mittels eines Touch-Display gebildetes, Anzeige- und Bedienelement aufweisen, beispielsweise zum Anzeigen von Mess- und/oder Betriebsdaten des Messsystems.

Das Basis-Modul M1 weist ein (Schutz-)Gehäuse 11 mit wenigstens einer von einer Gehäusewand 11+ zumindest teilweise umhüllten Kammer 11* sowie wenigstens eine innerhalb der Kammer 11* des (Schutz-)Gehäuses platzierte, beispielsweise zylindrische und/oder als Luftspule ausgebildete, erste elektrische Spule 12, die mit der Gehäusewand 11+ zumindest mittelbar mechanisch verbunden sowie elektrisch an die Messsystem-Elektronik ME angeschlossene ist, auf, und das Vibronik-Modul M2 weist wenigstens einen, beispielsweise zylindrischen, ersten Permanentmagneten 22 auf. Die Messsystem-Elektronik ME kann, wie bei Messsystemen der in Rede stehenden Art durchaus üblich, zumindest teilweise ebenfalls innerhalb der Kammer 11* und/oder zumindest teilweise außerhalb der Kammer 11*, insb. nämlich innerhalb eines Elektronik-Gehäuses 100 des Messsystems, untergebracht bzw. modular ausgebildet sein. Das Messsystem kann beispielsweise als ein modulares Coriolis-Massestrom-Messgerät ausgebildet sein und/oder einem der in den eingangs erwähnten Patentanmeldungen WO 2019/017891 A1, WO 2021121867 A1, DE 102021105397 A1, DE 102020133614 A1, DE 102020132685 A1, DE 102020133851 A1, DE 102020133566 A1, DE 102020132986 A1, DE 102020132686 A1, DE 102020132685 A1, DE 102020131452 A1, DE 102020132223 A1, DE 102020127356 A1, DE 102020114519 A1 bzw. DE 102020112154 A1 offenbarten vibronischen Messsysteme entsprechen.

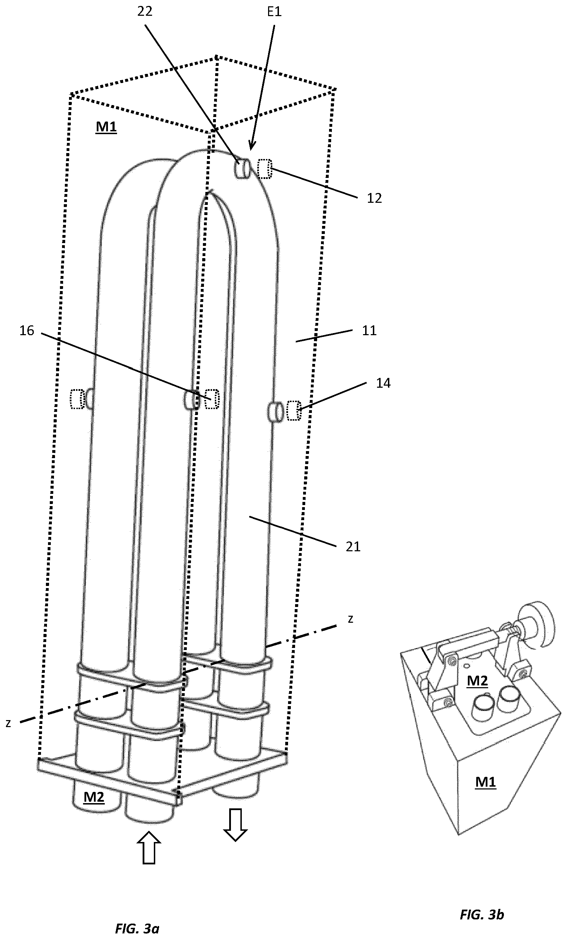

Das Basis-Modul M1 ist, wie in Fig. 3a und 3b schematisch dargestellt bzw. aus einer Zusammenschau der Fig. 1, 2, 3a und 3b ohne weiters ersichtlich, im Besonderen eingerichtet, das Vibronik-Modul M2 aufzunehmen und damit mechanisch fest, gleichwohl wieder lösbar verbunden zu werden, beispielsweise nämlich derart, dass das Vibronik-Modul M2 im Basis-Modul M2 arretiert ist, und/oder derart, dass das Vibronik-Modul auch vor Ort, nämlich in ein bereits (in einer Anlage) installiertes Basis-Modul (nachträglich) eingesetzt werden kann. Im Besonderen sind das Basis-Modul M1 und das Vibronik-Modul M2 ferner ausgestaltet, unter Bildung eines Messaufnehmers vom Vibrationstyp (des Messsystems) zusammengebaut bzw. so zusammengesetzt zu werden, dass mittels der (an die Messsystem-Elektronik ME angeschlossenen) elektrischen Spule 12 und mittels des Permanentmagneten 22 ein elektromechanischer Schwingungserreger und/oder ein (elektrodynamischer) Schwingungssensor des Messsystems gebildet ist. Nach einer weiteren Ausgestaltung der Erfindung ist das Vibronik-Modul insbesondere eingerichtet, so in das Basis-Modul eingebaut zu werden, dass dessen Permanentmagnet 22 innerhalb der Kammer 11* platziert, gleichwohl von der Gehäusewand 11+ beabstandet ist, insb. nämlich in einer bezüglich einer Ausrichtung und/oder eines kleinsten Abstandes zur elektrische Spule 12 vorgegebenen statischen (ersten) Einbauposition E1 gehalten ist und/oder derart, dass eine gedachte Längsachse des ersten Permanentmagnets und eine gedachte Längsachse der elektrischen Spule 12 miteinander fluchten bzw. in Verlängerung zueinander parallel verlaufen. Im Besonderen ist der Permanentmagnet 22 ferner eingerichtet, in Einbauposition E1 zusammen mit der elektrischen Spule 12 eine, beispielsweise als elektrodynamischer Schwingungserreger dienliche, Schwingspule und/oder eine, beispielsweise als elektrodynamischer Schwingungssensor dienliche, Tauchspule zu bilden. Nach einer weiteren Ausgestaltung der Erfindung sind das Vibronik-Modul M2 und das Basis-Modul M1 ferner eingerichtet, insb. auch vor Ort, werkzeuglos zusammengebaut und/oder, insb. zerstörungsfrei, wieder auseinandergebaut zu werden, insb. derart, dass das Vibronik-Modul zerstörungsfrei aus dem Basis-Modul M1 wieder ausgebaut werden. Alternativ oder in Ergänzung ist das Vibronik-Modul M2 im Besonderen austauschbar ausgebildet bzw. dafür eingerichtet, insb. zerstörungsfrei, auch wieder ausgebaut werden zu können, insb. nämlich auch vor Ort von außerhalb des Gehäuses und/oder durch eine in der Gehäusewand 11+ vorgesehene (Einschub-)Öffnung des (Schutz-) Gehäuses 11 hindurch herausnehmbar ist, und/oder ist das Vibronik-Modul M2 eingerichtet, insb. auch vor Ort, in das Basis-Modul M1 eingebaut zu werden, insb. derart, dass es von außerhalb des (Schutz-)Gehäuses 11 bzw. durch die (Einschub-)Öffnung hindurch in die Kammer 11* eingebracht werden kann. Dies beispielsweise auch ohne dafür das Basis-Modul M1 selbst hantieren bzw. aus der jeweiligen (Prozess-)Anlage ausbauen zu müssen. Die vorbezeichnete (Einschub-)Öffnung kann zudem, falls erforderlich, nach dem Einbau des Vibronik-Moduls mittels eines entsprechenden Deckels verschlossen werden, beispielsweise auch staubdicht und/oder dicht gegen starkes Strahlwasser und/oder explosionsfest. Im Ergebnis wird es somit u.a. auch ermöglicht, ein defektes oder verschlissenes (altes) Vibronik-Modul vor Ort gegen ein intaktes neues, ggf. auch nur einmalig bzw. nur für einen vorgegebenen Zeitraum zu gebrauchendes ("disposable"), Vibronik-Modul vor Ort sehr einfach auszutauschen. Zwecks Unterstützung eines korrekten Einbauens des Vibronik-Modul M2 in das Basis-Modul M1 können Vibronik-Modul M2 und Basis-Modul M1 jeweils miteinander korrespondierende Führungsstrukturen bzw. -elemente, beispielsweise entsprechende (Führungs-)Nuten in einem der beiden Module (M1, M2) und während des Zusammenbaus darin gleitende (Führungs-)Federn und/oder (Führungs-)Stifte im anderen der beiden Module, aufweisen. Zur weiteren Vereinfachung der Inbetriebnahme des Messsystems kann das Vibronik-Modul M2 ferner wenigstens ein das Vibronik-Modul M2 betreffende bzw. identifizierende Informationen tragendes Identifizierelement 28, beispielsweise ein Barcode-, QR-Code- bzw.

Funk-Etikett (RFID-TAG), aufweisen und/oder kann das Basis-Modul M1 zum Auslesen des Identifizierelements 28 wenigstens ein innerhalb des (Schutz-)Gehäuses positioniertes und an die Messsystem-Elektronik angeschlossenes (in die Kammer 11* hinein) Licht emittierendes Halbleiterelement 19a, beispielsweise eine Leuchtdiode (LED), und/oder einen oder mehrere, jeweils innerhalb des (Schutz-)Gehäuses positionierte und an die Messsystem-Elektronik angeschlossene Funk-Sender/Empfänger (RF-Transceiver) und/oder (für die Kammer 11* ausleuchtendes Licht empfindliche) Fotosensoren 19b, beispielsweise nämlich einen oder mehrere CCD-Fotosensoren und/oder einen oder mehrere CMOS-Fotosensoren, aufweisen.

Nach einer weiteren Ausgestaltung der Erfindung weist das Vibronik-Modul M2 wenigstens einen vom Permanentmagneten 22 entfernt positionierten, insb. zylindrischen und/oder zum Permanentmagneten 22 baugleichen, zweiten Permanentmagneten 24 auf. Ferner weist das Basis-Modul M1 dementsprechend wenigstens eine innerhalb der Kammer 11* des (Schutz-)Gehäuses platzierte, beispielsweise zylindrische und/oder als Luftspule ausgebildete und/oder zur ersten elektrische Spule 12 baugleiche, zweite elektrische Spule 14 auf, die (entfernt von der elektrischen Spule 12) mit der Gehäusewand 11+ zumindest mittelbar mechanisch verbunden und ebenfalls elektrisch an die Messsystem-Elektronik angeschlossen ist, und ist das Basis-Modul zudem eingerichtet, das Vibronik-Modul so aufzunehmen, dass der Permanentmagnet 24 in einer, insb. bezüglich einer Ausrichtung und/oder von der ersten Einbauposition entfernten, zweiten Einbauposition gehalten ist bzw. dass eine gedachte Längsachse des Permanentmagneten 24 und eine gedachte Längsachse der elektrischen Spule 14 miteinander fluchten bzw. in Verlängerung zueinander parallel sind. Darüber hinaus kann das Vibronik-Modul M2 auch mehr als zwei voneinander entfernt angeordnete Permanentmagnete 22, 24, mithin wenigstens einen dritten Permanentmagnet 26, und kann das Basis-Modul M1 mehr als zwei voneinander entfernt innerhalb der Kammer 11* angeordnete elektrische Spulen 12, 14, mithin wenigstens eine dritte Luftspule 16 aufweisen.

Nach einer weiteren Ausgestaltung der Erfindung weist das Vibronik-Modul M2 wenigstens ein (erstes) Rohr 31 mit einer eine äußere Mantelfläche des Rohrs 31 bildenden Rohrwandung, beispielsweise aus einem Metall oder einem Kunststoff, und mit einem von nämlicher Rohrwandung umhüllten Lumen 21*, auf und ist der Permanentmagnet 22 außen an der Rohrwandung fixiert, beispielsweise nämlich stoffschlüssig damit verbunden. Wie in Fig. 1 schematisch dargestellt, kann das wenigstens eine Rohr 31 zumindest abschnittsweise gerade und/oder zumindest abschnittsweise gebogen sein, beispielsweise derart, dass ein sich zwischen einem ersten Segment-Ende und einem davon entfernten zweiten Segment-Ende der Rohrwandung erstreckendes Mittel-Segment der Rohrwandung U-förmig oder V-förmig ausgebildet ist und/oder, dass, wie auch in Fig. 1 schematisch dargestellt, der wenigstens eine Permanentmagnet 22 außen am vorbezeichneten Mittel-Segment angebracht ist. Auch der vorbezeichnete Permanentmagnet 24 und/oder weitere Permanentmagnete (26) des Vibronik-Moduls M2 können beispielsweise ebenfalls außen am Mittel-Segment angebracht sein. Das wenigstens eine Rohr 31 ist ferner u.a. auch dafür vorgesehen, in der vorbeschriebenen Weise in das Basis-Modul M1 eingebaut und zudem auch in den Verlauf einer (Messstoff-)Leitung, beispielsweise eine Schlauchleitung oder eine Rohrleitung, eingegliedert zu werden. Zudem ist das wenigstens eine Rohr 31 im Besonderen eingerichtet, in seinem Lumen einen, insb. zumindest zeitweise mit einer vorgebbaren, beispielsweise nämlich vom vorbezeichneten ersten Segment-Ende zum vorbezeichneten zweiten Segment-Ende weisenden, Strömungsrichtung, strömenden, beispielsweise nämlich über die vorbezeichnete (Messstoff-)Leitung ein- bzw. ausgeleiten, fluiden Messstoff zu führen und währenddessen, insbesondere während eines (normalen) Messmodus, vibrieren gelassen zu werden; dies im Besonderen auch in der Weise, dass das wenigstens eine Rohr 31 erzwungene Biege- bzw. Resonanzschwingungen um eine statische Ruhelage ausführt und/oder dass der wenigstens eine Permanentmagnet 22 relativ zur elektrischen Spule 12 bewegt wird. Derartige mechanische Schwingungen des wenigstens einen (Mess-)Rohrs 31 bzw. dessen Mittel-Segments können beispielsweise mittels des vorbezeichneten, mittels des Permanentmagneten 22 und der Spule 12 gebildeten Schwingungserregers angeregt bzw. aufrechterhalten und/oder mittels des vorbezeichneten, (mittels des Permanentmagneten 22 und der Spule 12) gebildeten Schwingungssensors erfasst werden, insb. derart, dass durch den Schwingungssensor wenigstens ein nämliche Schwingungen des Rohrs 31 bzw. dessen Mittel-Segments repräsentierendes Schwingungssignal bereitgestellt wird. Nicht zuletzt um derartige Vibrationen des wenigstens einen (Mess-)Rohrs 31, insb. nämlich des vorbezeichneten Mittel-Segments, zu ermöglichen ist das Vibronik-Modul M2 nach einer weiteren Ausgestaltung der Erfindung ferner eingerichtet, so in Basis-Modul M1 bzw. dessen (Schutz-)Gehäuse 11 eingebaut zu werden, dass, wie auch in Fig. 3a schematisch dargestellt, das wenigstens (Mess-)Rohr 31 zumindest teilweise, beispielsweise auch vollständig, innerhalb der Kammer 11* platziert, gleichwohl zumindest dessen vorbezeichnetes Mittel-Segment von der Gehäusewand 11+ beabstandet ist.

Wie bei solchen Vibronik-Modulen bzw. damit gebildeten vibronischen Messsystemen durchaus üblich, kann das Vibronik-Modul M2 weiters wenigstens ein, beispielsweise auch zum ersten Rohr baugleiches und/oder funktionsgleiches, zweites (Mess-)Rohr 32 mit einer eine äußere Mantelfläche des zweiten Rohrs bildenden Rohrwandung, insb. aus einem Metall oder einem Kunststoff, und mit einem von nämlicher Rohrwandung umhüllten Lumen, aufweisen. Für diesen Fall kann der vorbezeichnete zweite Permanentmagnet 24, beispielsweise nämlich vis-a-vis des am ersten Rohr 31 fixierten Permanentmagneten 22, auch am zweiten Rohr fixiert, insb. nämlich stoffschlüssig damit verbunden, sein; dies beispielsweise auch derart, dass eine gedachte Längsachse des Permanentmagneten 24 und eine gedachte Längsachse des Permanentmagneten 22 miteinander fluchten bzw. in Verlängerung zueinander parallel verlaufen. Die ersten und zweiten (Mess-)Rohre 31, 32 können zudem, wie bei vibronischen Messsystemen der in Rede stehenden Art durchaus üblich, mittels eines einlassseitigen ersten Strömungsteilers und eines auslassseitigen zweiten Strömungsteilers miteinander fluidisch verbunden und ggf. auch im Betrieb des Messsystems in den Verlauf der vorbezeichneten (Messstoff-)Leitung eingegliedert sein. Nicht zuletzt für den vorbeschriebenen Fall, dass das Vibronik-Modul M2 mittels zweier Rohre (31, 32) gebildet ist, kann das Vibronik-Modul M2 auch mehr als drei voneinander entfernt angeordnete Permanentmagnete, beispielsweise nämlich insgesamt wenigsten sechs Permanentmagnete, und kann das Basis-Modul M1 dementsprechend mehr als drei voneinander entfernt innerhalb der Kammer 11* angeordnete elektrische Spulen, beispielsweise nämlich insgesamt wenigstens sechs, beispielsweise auch jeweils als Luftspulen ausgebildete, elektrische Spulen aufweisen.

Zum Anregen und Aufrechterhalten mechanischer Schwingungen (während des vorbezeichneten Messmodus) des wenigstens einen (Mess-)Rohrs 31 bzw. des damit gebildeten Vibronik-Moduls M2 ist die Messsystem-Elektronik ME nach einer weiteren Ausgestaltung zudem eingerichtet, ein (erstes) elektrisches (Mess-)Treibersignal bereitzustellen und in wenigstens eine der elektrischen Spulen (12, 14) des Basis-Moduls M2, beispielsweise nämlich die Spule 12 und/oder die vorbezeichnete Spule 14, einzuleiten, um für die vorbezeichneten mechanischen Schwingungen benötigte elektrische Leistung in die wenigstens eine elektrische Spule einzuspeisen; dies im Besonderen in der Weise, dass das wenigstens eine (erste) (Mess-)Treibersignal einen eingeprägten Wechselstrom und/oder wenigstens eine einer mechanischen Resonanzfrequenz des Vibronik-Moduls M2, insb. nämlich dessen wenigstens einen (Mess-)Rohrs 31 entsprechenden Signalfrequenz aufweist. Für den vorbezeichneten Fall, dass das Basis-Modul M1 neben der elektrischen Spule 12 auch zumindest die zweite elektrische Spule 14 umfasst, kann die Messsystem-Elektronik ME zudem ferner eingerichtet sein, mittels eines zweiten elektrischen (Mess-)Treibersignals, insb. mit einem eingeprägten Wechselstrom und/oder mit einer mechanischen Resonanzfrequenz des Vibronik-Moduls bzw. dessen wenigstens einen (Mess-)Rohrs entsprechenden Signalfrequenz und/oder simultan mit dem (ersten) (Mess-)Treibersignal, elektrische Leistung in die zweite elektrische Spule 14 einzuspeisen.

Nach einer anderen Ausgestaltung der Erfindung ist die Messsystem-Elektronik ME u.a. auch dafür eingerichtet, basierend auf der (Mess-)Spannung bzw. dafür ermittelten (Parameter-)Messwerten Messwerte für die wenigstens vom Messstoff eine zu erfassende Messgröße zu berechnen.

Die Aufgabe der Erfindung besteht darin, die Überprüfung von modularen vibronischen Messsystemen dahingehend zu verbessern, dass damit allfällige Störungen bzw. Defekte des Basis-Moduls und/oder der Messsystem-Elektronik, nicht zuletzt auch von die Messgenauigkeit des Messsystems insgesamt herabsetzenden Verschleiß- bzw. Alterungserscheinungen des Basis-Moduls bzw. der Messsystem-Elektronik, möglichst frühzeitig und zuverlässig detektiert, ggf. auch vermeldet werden können. Die Detektion der Störungen bzw. Defekte des Basis-Moduls sollte dabei jedoch nicht durch Defekte an dem Vibronik-Modul oder durch mobile, nämlich nicht zum Basis-Modul gehörige magnetfelderzeugende Vorrichtungen verfälscht werden.

Dafür ist die Messsystem-Elektronik (ME) des erfindungsgemäßen Messsystems im Besonderen ferner auch dazu eingerichtet, in einem, insb. dem Messmodus zeitlich vorausgehenden und/oder zeitlich nachfolgenden, Prüfmodus bei Abwesenheit des Vibronik-Moduls (M2) in der Kammer (11*) - insbesondere auch bei Abwesenheit weiterer mobiler, nämlich nicht zum Basis-Modul (M1) gehöriger magnetfelderzeugender Vorrichtungen - eine Überprüfung, insbesondere eine (Re-)Kalibrierung, des Basis-Moduls (M1) und/oder der Messsystem-Elektronik (ME) durchzuführen, nämlich bei Abwesenheit des Vibronik-Moduls (M2) sowohl ein (erstes) (Prüf-)Treibersignal in die erste elektrische Spule (12) einzuspeisen als auch eine, insb. induktiv von der ersten elektrischen Spule (13) in die zweite elektrische Spule (14) eingekoppelte, elektrische (Prüf-)Spannung von der zweiten elektrischen Spule (14) zu erfassen und auszuwerten, insbesondere wenigstens einen Parameter der (Prüf-)Spannung, insbesondere eine Amplitude und/oder eine Frequenz und/oder einen Phasenwinkel und/oder einen Messwert einer Induktivität, mit einem vorabermittelten Referenzwert und/oder mit einem vorgegebenen Schwellenwert zu vergleichen.

Nach einer anderen Ausgestaltung der Erfindung ist die Messsystem-Elektronik ME u.a. auch dafür eingerichtet, eine, beispielsweise in der ersten elektrischen Spule 12 und/oder in die vorbezeichnete zweiten elektrischen Spule 14 induzierte, erste elektrische (Prüf-)Spannung zu erfassen und auszuwerten, beispielsweise nämlich unter Verwendung der (Prüf-)Spannung (Parameter-)Messwerte für wenigstens einen Parameter der (Prüf-)Spannung, wie etwa eine Amplitude, eine Frequenz und/oder einen Phasenwinkel, zu ermitteln.

Des Weiteren oder alternativ kann die Messsystem-Elektronik ME auch eingerichtet sein, basierend auf der (Prüf-)Spannung bzw. dafür ermittelten (Parameter-)Messwerten Messwerte für eine Induktivität zu berechnen, beispielsweise um diese bei einer Überprüfung einer Funktionstüchtigkeit des Messsystems entsprechend zu berücksichtigen bzw. um die ermittelte Induktivität mit einem vorab ermittelten (Induktivitäts-)Referenzwert und/oder einem oder mehreren dafür vorgegebenen Schwellenwerten zu vergleichen. Alternativ oder in Ergänzung kann die Messsystem-Elektronik ME beispielsweise auch eingerichtet sein, zur Überprüfung der Funktionstüchtigkeit des Messsystems einen oder mehrere der vorbezeichneten (Parameter-)Messwerte mit einem oder mehreren dafür vorab ermittelten (Parameter-)Referenzwerten und/oder einem oder mehreren dafür vorgegebenen Schwellenwerten zu vergleichen. Für den vorbezeichneten Fall, dass das Basis-Modul M1 neben der elektrischen Spule 12 auch zumindest die elektrische Spule 14 umfasst, kann die Messsystem-Elektronik zudem aber auch eingerichtet sein, eine, in der zweiten Spule 14 induzierte, elektrische (Prüf-)Spannung zu erfassen und auszuwerten, beispielsweise nämlich anhand auch der (Prüf-)Spannung (Parameter-)Messwerte für den wenigstens einen Parameter der (Prüf-)Spannung und/oder eine zwischen den (Prüf-)Spannungen etablierte Phasendifferenz zu berechnen, beispielsweise um basierend darauf Messwerte für die wenigstens eine vom Messstoff zu erfassende Messgröße zu berechnen. Nach einer weiteren Ausgestaltung der Erfindung ist die Messsystem-Elektronik ME im Besonderen auch dafür eingerichtet anhand einer zwischen den und (Prüf-)Spannungen etablierten Phasendifferenz Messwerte für wenigstens eine Messgröße, insb. einen Massestrom, eines strömenden Fluids zu ermitteln und/oder ist die Messsystem-Elektronik eingerichtet, (Parameter-)Messwerte für die vorbezeichnete Phasendifferenz zu ermitteln und auszuwerten, beispielsweise nämlich einen oder mehrere (Parameter-)Messwerte für die Phasendifferenz mit einem vorab ermittelten (Parameter-)Referenzwert und/oder einem oder mehreren dafür vorgegebenen Schwellenwerten zu vergleichen. Alternativ oder in Ergänzung kann die Messsystem-Elektronik ferner eingerichtet sein, Messwerte auch für eine Induktivität der ersten und/oder zweiten elektrischen Spule zu ermitteln.

Die abgebildete Messsystem-Elektronik ME ist dazu eingerichtet, gerade bei Abwesenheit des Vibronik-Moduls M2 in der Kammer 11* (d.h. das Vibronik-Modul M2 oder andere externe magnetfelderzeugende Vorrichtungen sind nicht in der Kammer angeordnet) eine (Re-)Kalibrierung des Basis-Moduls und/oder der Messsystem-Elektronik ME durchzuführen, insb. nämlich bei Abwesenheit des Vibronik-Moduls M2 ein (erstes) (Prüf-)Treibersignal in die erste elektrische Spule 12 einzuspeisen. Dies erfolgt bevor das Vibronik-Modul M2 in die Kammer 11* eingesetzt oder nachdem das Vibronik-Modul M2 aus der Kammer 11* - bspw. zwecks Wechsel des Prozessleitsystems und/oder Prozessmediums - entfernt wird. Dafür kann die Kammer-Öffnung der Kammer 11* mit einem Kammer-Deckel verschlossen sein und/oder die Kammer 11* mit einer einsetzbaren und entnehmbaren, magnetisch transparenten (*µᵣ* ≤ 3) Füllkörper ausgefüllt sein.

Die Messsystem-Elektronik ME ist eingerichtet, mittels eines (ersten) elektrischen (Prüf-)Treibersignals, insb. mit einem eingeprägten Wechselstrom, elektrische Leistung in die erste elektrische Spule einzuspeisen. Das (Prüf-)Treibersignal weist eine bekannte Charakteristik auf und dient dazu, eine elektrische Spannung in einer weiteren (zweiten) elektrischen Spule 14 (16) zu induzieren. Bei der ersten elektrischen Spule 12 kann es sich beispielsweise um die Treiberspule bzw. Erregerspule handeln, die dazu eingerichtet ist, das Vibronik-Modul bzw. mindestens ein (Mess-) Rohr des Vibronik-Moduls bei Anwesenheit des Vibronik-Moduls in der Kammer 11* in Schwingungen zu versetzen.

Die Messsystem-Elektronik ME eingerichtet ist, eine, insb. induktiv von der ersten elektrischen Spule 12 in die zweite elektrische Spule 14 eingekoppelte bzw. in der zweiten elektrischen Spule 14 induzierte, zweite elektrische (Prüf-)Spannung zu erfassen und auszuwerten, insb. nämlich anhand der (Prüf-)Spannung (Parameter-) Messwerte für wenigstens einen Parameter der (Prüf-)Spannung, insb. eine Amplitude und/oder eine Frequenz und/oder einen Phasenwinkel und/oder eine zwischen den an der zweiten und dritten elektrischen Spule ermittelten (Prüf-)Spannungen etablierte Phasendifferenz, zu ermitteln und/oder Messwerte für wenigstens eine Messgröße eines strömenden Fluids und/oder eine Induktivität zu ermitteln. Nachdem über die Messsystems-Elektronik ME die genannten Messgröße bzw. Parameter ermittelt sind, werden (Parameter-)Messwerte für die (Prüf-)Phasendifferenz ermittelt und ausgewertet, insb. einen oder mehrere (Parameter-)Messwerte für die (Prüf-)Phasendifferenz mit einem vorab ermittelten (Parameter-) Referenzwert und/oder einem oder mehreren dafür vorgegebenen Schwellenwerten verglichen.

Alternativ oder zusätzlich ist die Messsystem-Elektronik ME dazu eingerichtet, mittels eines (zweiten) elektrischen (Prüf-)Treibersignals, insb. mit einem eingeprägten Wechselstrom, elektrische Leistung in die zweite elektrische Spule 14 einzuspeisen. Dies dient dazu um die Funktionalität der ersten und/oder der zweiten elektrischen Spule 12, 14 zu überprüfen. Dafür ist die Messsystem-Elektronik ME eingerichtet, eine, insb. mittels der zweiten Spule 14 induktiv in die erste elektrische Spule 12 eingekoppelte bzw. in der erste elektrischen Spule 12 induzierte, elektrische (Prüf-)Spannung zu erfassen und auszuwerten, insb. nämlich unter Verwendung der (Prüf-)Spannung (Parameter-) Messwerte für wenigstens einen Parameter der (Prüf-)Spannung, insb. eine Amplitude, eine Frequenz und/oder einen Phasenwinkel, und/oder Messwerte für wenigstens eine Messgröße eines strömenden fluiden Messstoffs und/oder eine Induktivität zu ermitteln. Gemäß der Ausgestaltung kann über die erste elektrische Spule 12 nicht nur ein Magnetfeld erzeugt werden, sondern auch ein durch die zweite elektrische Spule 14 erzeugtes Magnetfeld gemessen bzw. detektiert werden. Dafür ist die Messsystem-Elektronik ME eingerichtet, anhand der (Prüf-)Spannung eine Induktivität, insbesondere der ersten oder zweiten elektrischen Spule 12, 14 zu ermitteln, insb. nämlich die ermittelte Induktivität mit einem vorab ermittelten (Induktivitäts-)Referenzwert und/oder einem oder mehreren dafür vorgegebenen Schwellenwerten zu vergleichen; und/oder die Messsystem-Elektronik eingerichtet ist, anhand der (Prüf-)Spannung, insb. digitale, (Parameter-)Messwerte für wenigstens einen Parameter der (Prüf-)Spannung, insb. eine Amplitude, eine Frequenz und/oder einen Phasenwinkel, zu ermitteln, insb. nämlich die (Parameter-)Messwerte mit einem vorab ermittelten (Parameter-)Referenzwert und/oder einem oder mehreren dafür vorgegebenen Schwellenwerten zu vergleichen.

Weiterhin ist durch die in Fig. 1 bis 4 abgebildeten Ausgestaltungen auch die Variante abgebildet, in der das Basis-Modul M1 wenigstens eine, insb. innerhalb der Kammer 11* des (Schutz-)Gehäuses 11 platzierte, insb. zylindrische und/oder als Luftspule ausgebildete und/oder zur zweiten elektrische Spule 12 baugleiche, dritte elektrische Spule 16, die, insb. entfernt von der zweiten elektrischen Spule positioniert, insb. mit der Gehäusewand 11+ zumindest mittelbar mechanisch verbunden ist, aufweist; und die dritte elektrische Spule 16 elektrisch an die Messsystem-Elektronik ME angeschlossen ist. Der Zweck der dritten elektrischen Spule 16 ist ein zeitliche veränderliches Magnetfeld zu messen. Dafür ist die Messsystem-Elektronik eingerichtet während des Prüfmodus, mittels eines (dritten) elektrischen (Prüf-)Treibersignals, insb. mit einem eingeprägten Wechselstrom, elektrische Leistung in die dritte elektrische Spule 16 einzuspeisen und/oder eine, insb. mittels der ersten elektrischen Spule 12 und/oder der zweiten elektrischen Spule 14 induktiv in die dritte elektrische Spule 16 eingekoppelten bzw. in der dritten elektrischen Spule 16 induzierten, elektrische (Prüf-)Spannung zu erfassen und auszuwerten, insb. nämlich unter Verwendung der (Prüf-)Spannung (Parameter-)Messwerte für wenigstens einen Parameter der (Prüf-)Spannung, insb. eine Amplitude, eine Frequenz und/oder einen Phasenwinkel und/oder eine Induktivität zu ermitteln.

Alternativ oder zusätzlich kann die Messsystem-Elektronik ME dazu eingerichtet sein, eine, insb. mittels der dritten elektrischen Spule 16 induktiv in die erste elektrische Spule 12 und/oder die zweite elektrische Spule 14 eingekoppelten bzw. in der ersten elektrischen Spule 16 und/oder der zweiten elektrischen Spule 14 induzierten, elektrische (Prüf-)Spannung zu erfassen und auszuwerten, insb. nämlich unter Verwendung der (Prüf-)Spannung (Parameter-)Messwerte für wenigstens einen Parameter der (Prüf-)Spannung, insb. eine Amplitude, eine Frequenz und/oder einen Phasenwinkel und/oder eine Induktivität der ersten elektrischen Spule 12 oder der zweiten elektrischen Spule 14 zu ermitteln.

Die Messsystem-Elektronik ME ist nach einer weiteren Ausgestaltung der Erfindung ferner auch eingerichtet, das (erste) elektrische (Prüf-) Treibersignal, das (zweite) elektrische (Prüf-)Treibersignal und/oder das (dritte) elektrische (Prüf-)Treibersignal mit einer mechanischen Resonanzfrequenz, insb. ersten mechanischen Resonanzfrequenz und/oder zweiten mechanischen Resonanzfrequenz, des Vibronik-Moduls entsprechenden Signalfrequenz bereitzustellen.

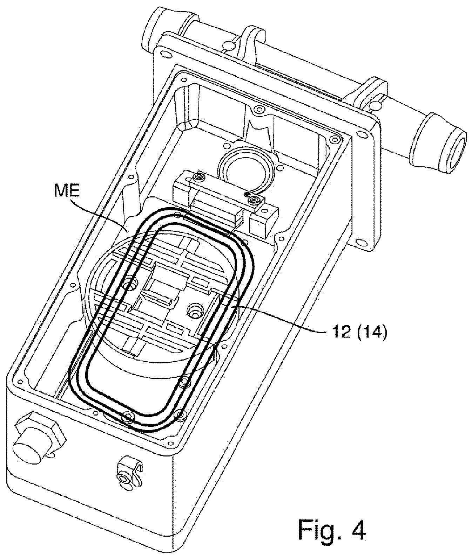

In der Fig. 4 wird eine alternative erfindungsgemäße Ausgestaltung gezeigt, bei der die erste, zweite oder dritte elektrische Spule 12, 14, 16 in der Messsystem-Elektronik ME angeordnet ist bzw. Teil der Messsystem-Elektronik ME ist. Das heißt, dass die erste, zweite oder dritte elektrische Spule 12, 14, 16 auf einer Leiterplatte der Messsystem-Elektronik MA angeordnet sein kann. In dem Fall ist die erste, zweite oder dritte elektrische Spule 12, 14, 16 bzw. eine der drei Spulen 12, 14, 16 jeweils zusätzlich zu der Treiberspule und der mindestens einen Sensorspule bzw. der mindestens zwei Sensorspulen (pro Rohr) vorgesehen. Gemäß der Ausgestaltung handelt es sich bei der ersten, zweiten oder dritten elektrischen Spule 12, 14, 16 um eine Diagnosespule, die derart ausgestaltet und angeordnet ist, dass das erzeugte Magnetfeld in mindestens einer weiteren elektrischen Spule und bevorzugt in allen weiteren elektrischen Spulen des Basis-Moduls im Betrieb eine elektrische Spannung induziert.

Alternativ oder zusätzlich kann die in bzw. an der Messsystem-Elektronik ME angeordnete Diagnosespule dazu eingerichtet sein, das durch die erste Spule 12 erzeugte Magnetfeld zu überwachen. In dem Fall ist die Messsystem-Elektronik ME dazu eingerichtet, eine an der Diagnosespule induzierte Spannung zu detektieren und diese für die (Re-)Kalibration zu verwenden.

Alternativ kann die dritte elektrische Spule auch durch einen von einer Spule verschiedenen Magnetfeldsensor, insbesondere einen Hall-Sensor ersetzt werden, der dazu eingerichtet ist, ein durch die erste, zweite und/oder dritte elektrische Spule 12, 14, 16 erzeugtes Magnetfeld zu erzeugen.

Die dritte elektrische Spule 16 kann in einer Ausgestaltung auch räumlich verschiebbar ausgestaltet sein, um diese somit näher an die zu überprüfende elektrische Spule zu bringen.

In den abgebildeten Ausgestaltungen sind die erste, zweite und/oder dritte elektrische Spule 12, 14, 16 immer auf einer gemeinsamen Kammerfläche der Kammer 11* angeordnet. Die Spulen 12, 14, 16 können jedoch auch auf unterschiedlichen Kammerflächen angeordnet sein. So kann beispielsweise die zweite und/oder die dritte Spule 14 (16) auf einer der ersten Spule 12 gegenüberliegenden Kammerfläche angeordnet sein, d.h. dass die erste Spule 12 von der zweiten und/oder dritten Spule 14 (16) durch das Aufnahmevolumen der Kammer 11* getrennt ist.

## Patentansprüche

1. Modulares Coriolis-Massestrom-Messgerät, zum Messen einer Messgröße eines fluiden Messstoffes, welches Messsystem umfasst:
- eine Messsystem-Elektronik (ME);
- ein Basis-Modul (M1), welches Basis-Modul (M1) aufweist:
-- ein Gehäuse (11), insbesondere ein Schutz-Gehäuse, mit wenigstens einer von einer Gehäusewand (11+) zumindest teilweise umhüllten Kammer (11*),
-- eine wenigstens eine, insb. innerhalb der Kammer (11*) des Gehäuses (11) platzierte, insb. zylindrische und/oder als Luftspule ausgebildete, erste elektrische Spule (12), die mit der Gehäusewand (11+) zumindest mittelbar mechanisch verbunden sowie elektrisch an die Messsystem-Elektronik (ME) angeschlossen ist, und
-- wenigstens eine, insb. innerhalb der Kammer (11*) des Gehäuses (11) platzierte, insb. zylindrische und/oder als Luftspule ausgebildete und/oder zur ersten elektrische Spule (12) baugleiche, zweite elektrische Spule (14), die, insb. entfernt von der ersten elektrischen Spule positioniert und mit der Gehäusewand (11+) zumindest mittelbar mechanisch verbunden ist, welche elektrisch an die Messsystem Elektronik (ME) angeschlossen ist;
- **wobei** das Basis-Modul (M1) eingerichtet ist, ein Vibronik-Modul (M2) des Messsystems, insbesondere in die Kammer (11*), aufzunehmen und damit mechanisch fest, gleichwohl wieder lösbar verbunden zu werden, insb. nämlich unter Bildung eines Messaufnehmers vom Vibrationstyp bzw. eines vibronischen Messsystems und/oder derart, dass das Vibronik-Modul (M2) im Basis-Modul (M1) arretiert ist bzw. nicht beweglich ist;
- **wobei** die Messsystem-Elektronik (ME) dazu eingerichtet ist, in einem Messmodus bei Anwesenheit des Vibronik-Moduls (M2) in der Kammer (11*) ein dem Anregen von Vibrationen des Vibronik-Moduls (M2) dienliches Mess-Treibersignal in die erste elektrische Spule (12) einzuspeisen als auch eine durch Vibrationen des Vibronik-Moduls (M2) in die zweite elektrische Spule (14) induzierte, elektrische Mess-Spannung von der zweiten elektrischen Spule (14) zu erfassen und auszuwerten, insbesondere Messwerten für die mindestens eine Messgröße zu ermitteln,
- **dadurch gekennzeichnet, dass** die Messsystem-Elektronik (ME) dazu eingerichtet ist, in einem, insb. dem Messmodus zeitlich vorausgehenden und/oder zeitlich nachfolgenden, Prüfmodus bei Abwesenheit des Vibronik-Moduls (M2) in der Kammer (11*) - insbesondere auch bei Abwesenheit weiterer mobiler, nämlich nicht zum Basis-Modul (M1) gehöriger magnetfelderzeugender Vorrichtungen - eine Überprüfung, insbesondere eine Kalibrierung, bevorzugt eine Re-Kalibrierung, des Basis-Moduls (M1) und/oder der Messsystem-Elektronik (ME) durchzuführen, nämlich bei Abwesenheit des Vibronik-Moduls (M2) sowohl ein Prüf-Treibersignal, insbesondere ein erstes Prüf-Treibersignal, in die erste elektrische Spule (12) einzuspeisen als auch eine, insb. induktiv von der ersten elektrischen Spule (13) in die zweite elektrische Spule (14) eingekoppelte, elektrische Prüf-Spannung von der zweiten elektrischen Spule (14) zu erfassen und auszuwerten, insbesondere wenigstens einen Parameter der Prüf-Spannung, insbesondere eine Amplitude und/oder eine Frequenz und/oder einen Phasenwinkel und/oder einen Messwert einer Induktivität, mit einem vorabermittelten Referenzwert und/oder mit einem vorgegebenen Schwellenwert zu vergleichen.

2. Coriolis-Massestrom-Messgerät nach dem vorherigen Anspruch,
- **wobei** die Messsystem-Elektronik eingerichtet ist, mittels eines elektrischen Messsystem-Treibersignals und/oder des Prüf-Treibersignals, insb. des ersten Prüf-Treibersignals und bevorzugt mit einem eingeprägten Wechselstrom, elektrische Leistung in die erste elektrische Spule einzuspeisen.

3. Coriolis-Massestrom-Messgerät nach einem der vorherigen Ansprüche,
**- wobei** die Messsystem-Elektronik (ME) dazu eingerichtet ist, das Prüf-Treibersignal, insbesondere das erste Prüf-Treibersignal, mit mindestens zwei voneinander abweichenden Frequenzen, insbesondere mit einer Resonanzfrequenz des Gehäuses (11), einer nominellen Resonanzfrequenz des Vibronik-Moduls (M2) und/oder einer Netzfrequenz, einzuspeisen.

4. Coriolis-Massestrom-Messgerät nach einem der vorherigen Ansprüche,
- **wobei** die Messsystem-Elektronik (ME) ebenfalls eingerichtet ist, im Prüfmodus mittels eines zweiten elektrischen Prüf-Treibersignals, insb. mit einem eingeprägten Wechselstrom, elektrische Leistung in die zweite elektrische Spule (14) einzuspeisen.

5. Coriolis-Massestrom-Messgerät nach dem vorherigen Ansprüche,
- **wobei** die Messsystem-Elektronik (ME) ebenfalls eingerichtet ist, im Prüfmodus eine, insb. mittels der zweiten Spule (14) induktiv in die erste elektrische Spule (12) eingekoppelte bzw. in der erste elektrischen Spule (12) induzierte, elektrische Prüf-Spannung zu erfassen und auszuwerten, insb. nämlich unter Verwendung der Prüf-Spannung wenigstens einen Parameter der Prüf-Spannung, insb. eine Amplitude und/oder eine Frequenz und/oder einen Phasenwinkel und/oder einen Messwert einer Induktivität zu ermitteln und mit einem vorabermittelten Referenzwert und/oder mit einem vorgegebenen Schwellenwert zu vergleichen.

6. Coriolis-Massestrom-Messgerät nach einem der vorherigen Ansprüche,
- **wobei** die Messsystem-Elektronik eingerichtet ist, anhand der Prüf-Spannung eine Induktivität, insbesondere der ersten elektrischen Spule, zu ermitteln, insb. nämlich die ermittelte Induktivität mit einem vorab ermittelten Referenzwert, insbesondere Induktivitäts-Referenzwert und/oder einem oder mehreren dafür vorgegebenen Schwellenwerten zu vergleichen; und/oder
- **wobei** die Messsystem-Elektronik eingerichtet ist, anhand der Prüf-Spannung, insb. digitale, Messwerte für wenigstens einen Parameter der Prüf-Spannung, insb. eine Amplitude, eine Frequenz und/oder einen Phasenwinkel, zu ermitteln, insb. nämlich die Messwerte mit einem vorab ermittelten Referenzwert und/oder einem oder mehreren dafür vorgegebenen Schwellenwerten zu vergleichen.

7. Coriolis-Massestrom-Messgerät nach einem der vorherigen Ansprüche,
- **wobei** das Basis-Modul (M1) wenigstens eine, insb. innerhalb der Kammer (11*) des Gehäuses (11) platzierte, insb. zylindrische und/oder als Luftspule ausgebildete und/oder zur zweiten elektrische Spule (12) baugleiche, dritte elektrische Spule (16) aufweist, die, insb. entfernt von der zweiten elektrischen Spule positioniert, insb. mit der Gehäusewand (11+) zumindest mittelbar mechanisch verbunden ist; und
- **wobei** die dritte elektrische Spule (16) elektrisch an die Messsystem-Elektronik (ME) angeschlossen ist.

8. Coriolis-Massestrom-Messgerät nach dem vorherigen Anspruch,
- **wobei** die Messsystem-Elektronik eingerichtet ist, mittels eines dritten elektrischen Prüf-Treibersignals, insb. mit einem eingeprägten Wechselstrom, elektrische Leistung in die dritte elektrische Spule einzuspeisen.

9. Coriolis-Massestrom-Messgerät nach Anspruch 7 oder 8,
- **wobei** die Messsystem-Elektronik (ME) eingerichtet ist, eine, insb. mittels der ersten elektrischen Spule (12) und/oder der zweiten elektrischen Spule (14) induktiv in die dritte elektrische Spule (16) eingekoppelten bzw. in der dritten elektrischen Spule (16) induzierten, elektrischen Prüf-Spannung zu erfassen und auszuwerten, insb. nämlich unter Verwendung der Prüf-Spannung für wenigstens einen Parameter der Prüf-Spannung, insb. eine Amplitude und/oder eine Frequenz und/oder einen Phasenwinkel und/oder eine Induktivität zu ermitteln.

10. Coriolis-Massestrom-Messgerät nach einem der Ansprüche 7 bis 9,
**- wobei** die Messsystem-Elektronik (ME) eingerichtet ist, eine, insb. mittels der dritten elektrischen Spule (16) induktiv in die erste elektrische Spule (12) und/oder die zweite elektrische Spule (14) eingekoppelten bzw. in der erste elektrischen Spule (16) und/oder der zweiten elektrischen Spule (14) induzierten, elektrische Prüf-Spannung von der ersten elektrischen Spule (12) und/oder der zweiten elektrischen Spule (14) zu erfassen und auszuwerten, insb. nämlich unter Verwendung der Prüf-Spannung für wenigstens einen Parameter der Prüf-Spannung, insb. eine Amplitude und/oder eine Frequenz und/oder einen Phasenwinkel und/oder eine Induktivität zu ermitteln.

11. Coriolis-Massestrom-Messgerät nach Anspruch 7,
- **wobei** die Messsystem-Elektronik (ME) eingerichtet ist, eine, insb. mittels der ersten elektrischen Spule (12) induktiv in die zweite elektrische Spule (14) und die dritte elektrische Spule (16) eingekoppelten bzw. in der zweiten elektrischen Spule (14) und in der dritten elektrischen Spule (16) induzierten, elektrische Prüf-Spannungen zu erfassen und auszuwerten, insb. nämlich unter Verwendung der Prüf-Spannungen für wenigstens einen Parameter der Prüf-Spannungen, insb. jeweils eine Amplitude und/oder jeweils eine Frequenz und/oder jeweils einen Phasenwinkel und/oder jeweils eine Induktivität und/oder eine Phasendifferenz zwischen der an der zweiten Spule (14) erfassten Prüf-Spannung und der an der dritten Spule (16) erfassten Prüf-Spannung zu ermitteln.

12. Coriolis-Massestrom-Messgerät nach einem der vorherigen Ansprüche,
- **wobei** die Messsystem-Elektronik (ME) eingerichtet ist, das erste elektrische Prüf-Treibersignal, das zweite elektrische Prüf-Treibersignal und/oder das dritte elektrische Prüf-Treibersignal mit einer mechanischen Resonanzfrequenz, insb. ersten mechanischen Resonanzfrequenz und/oder zweiten mechanischen Resonanzfrequenz, des Vibronik-Moduls entsprechenden Signalfrequenz breitzustellen.

13. Coriolis-Massestrom-Messgerät nach einem der vorherigen Ansprüche,
- **wobei** das Vibronik-Modul (M2) wenigstens einen, insb. zylindrischen, ersten Permanentmagneten (22) aufweist.
- **wobei** das Vibronik-Modul (M2) eingerichtet ist, so in das Basis-Modul (M1) eingebaut zu werden, dass dessen erster Permanentmagnet (22) innerhalb der Kammer platziert, gleichwohl von der Gehäusewand beabstandet ist, insb. nämlich in einer bezüglich einer Ausrichtung und/oder eines kleinsten Abstandes zur ersten elektrische Spule (12) vorgegebenen und/oder mit der statischen Einbauposition, insbesondere ersten Einbauposition, gehalten ist und/oder derart, dass eine gedachte Längsachse des ersten Permanentmagnets und eine gedachte Längsachse der ersten elektrischen Spule (12) miteinander fluchten bzw. in Verlängerung zueinander parallel verlaufen.

14. Coriolis-Massestrom-Messgerät nach einem Ansprüche 7 bis 13,
- **wobei** die dritte elektrische Spule (16) Teil der Messsystem-Elektronik (ME) ist.

15. Coriolis-Massestrom-Messgerät nach einem Ansprüche 7 bis 14,
**- wobei** die dritte elektrische Spule räumlich verschiebbar ausgestaltet ist.

16. Coriolis-Massestrom-Messgerät nach einem der vorherigen Ansprüche,
- **wobei** die Messsystem-Elektronik (ME) eingerichtet ist, Messwerte für einen Spulenstrom oder davon abhängige Größen zu ermitteln und auszuwerten, insb. einen oder mehrere Messwerte für den Spulenstrom oder davon abhängige Größen mit einem vorab ermittelten Referenzwert, insbesondere Spulenstrom-Referenzwert, und/oder einem oder mehreren dafür vorgegebenen Schwellenwerten, insbesondere Spulenstrom-Schwellenwerten, zu vergleichen.

17. Coriolis-Massestrom-Messgerät nach einem der vorherigen Ansprüche,
- **wobei** die Messsystem-Elektronik (ME) eingerichtet ist, Messwerte für eine Signalstärke des Prüf-Treibersignals, insbesondere des ersten, zweiten und/oder dritten Prüf-Treibersignals, zu ermitteln und auszuwerten, insb. einen oder mehrere Messwerte für die Signalstärke des Prüf-Treibersignals, insbesondere des ersten, zweiten und/oder dritten Prüf-Treibersignals, mit einem vorab ermittelten Referenzwert, insbesondere Signalstärke-Referenzwert, und/oder einem oder mehreren dafür vorgegebenen Schwellenwerten, insbesondere Signalstärke-Schwellenwerte, zu vergleichen.

18. Coriolis-Massestrom-Messgerät nach einem der vorherigen Ansprüche,
**- wobei** die Messsystem-Elektronik (ME) eingerichtet ist, einen zeitlichen Signalverlauf des Treibersignals zu ermitteln und auszuwerten.

19. Coriolis-Massestrom-Messgerät nach einem der vorherigen Ansprüche,
**- wobei** die Messsystem-Elektronik (ME) dazu eingerichtet ist, im Prüfmodus bei Abwesenheit eines Vibronik-Moduls (M2) in der Kammer (11*), insbesondere auch bei Abwesenheit weiterer mobiler, nämlich nicht zum Basis-Modul (M1) gehöriger magnetfelderzeugender Vorrichtungen, die Überprüfung durchzuführen, sowohl das Prüf-Treibersignal, insbesondere das Prüf-Treibersignal, insbesondere das erste Prüf-Treibersignal, in die erste elektrische Spule (12) einzuspeisen als auch die, insb. induktiv von der ersten elektrischen Spule (13) in die zweite elektrische Spule (14) eingekoppelte, elektrische Prüf-Spannung von der zweiten elektrischen Spule (14) zu erfassen und auszuwerten, insbesondere den wenigstens einen Parameter der Prüf-Spannung, insbesondere die Amplitude und/oder die Frequenz und/oder den Phasenwinkel und/oder den Messwert der Induktivität, mit dem vorabermittelten Referenzwert und/oder mit dem vorgegebenen Schwellenwert zu vergleichen.

20. Verfahren zum Inbetriebnehmen und/oder Prüfen eines modularen Coriolis-Massestrom-Messgeräts umfassend:
- ein Basis-Modul (M1) gemäß Anspruch 1;
- eine Messsystem-Elektronik (ME) gemäß Anspruch 1;
- sowie ein Vibronik-Modul, insb. ein Vibronik-Modul gemäß Anspruch 13;
welches Verfahren umfasst:
- Überprüfen bzw. Kalibrieren des Basis-Moduls (M1) und/oder der Messsystem-Elektronik (ME) während eines Prüfmodus, mittels der Messsystem-Elektronik bei Abwesenheit des Vibronik-Moduls (M2) in der Kammer (11*), insbesondere auch bei Abwesenheit weiterer mobiler, nämlich nicht zum Basis-Modul (M1) gehöriger magnetfelderzeugender Vorrichtungen, insb. durch Einspeisen eines Treibersignals, insbesondere ersten Treibersignals, in die erste elektrische Spule (12) und durch Erfassen und Auswerten einer, insb. induktiv von der ersten elektrischen Spule (13) in die zweite elektrische Spule (14) eingekoppelten, elektrischen Spannung von der zweiten elektrischen Spule (14), insb. durch Vergleichen wenigstens eines Parameters der Spannung, insbesondere eine Amplitude und/oder eine Frequenz und/oder einen Phasenwinkel und/oder einen Messwert der Selbstinduktivität, mit einem vorabermittelten Referenzwert und/oder mit einem vorgegebenen Schwellenwert;
- Einsetzen eines Vibronik-Moduls (M2), insb. eines Vibronik-Moduls gemäß Anspruch 13, in das Basis-Modul (M1) zum Bilden eines Messaufnehmers vom Vibrationstyp bzw. des vibronischen Messsystems; und
- Ermitteln von Messwerten für die mindestens eine Messgröße während des Messmodus, durch Einspeisen eines Treibersignals in die erste elektrische Spule (12) zum Anregen von Vibrationen des Vibronik-Moduls (M2) und Erfassen einer durch Vibrationen des Vibronik-Moduls (M2) in die zweite elektrische Spule (14) induzierten, elektrischen Spannung von der zweiten elektrischen Spule (14).

## Claims

1. A modular Coriolis mass flow meter, for measuring a measured variable of a fluid measured substance, said measuring system comprising:
- Measuring system electronics (ME);
- a basic module (M1), said basic module (M1) having:
-- A housing (11), in particular a protective housing, with at least one chamber (11*) at least partly enclosed by a housing wall (11+),
-- at least one first electric coil (12), in particular positioned inside the chamber (11*) of the housing (11), in particular a cylindrical one and/or one configured as an air coil, which is mechanically connected, at least indirectly, to the housing wall (11+) and electrically connected to the measuring system electronics (ME), and
-- at least one second electric coil (14), in particular positioned inside the chamber (11*) of the housing (11), in particular a cylindrical one and/or one configured as an air coil and/or one that has an identical design to the first electric coil (12), which is in particular positioned at a distance from the first electric coil and is mechanically connected, at least indirectly, to the housing wall (11+), which is electrically connected to the measuring system electronics (ME);
- **wherein** the basic module (M1) is configured to mount a vibronic module (M2) of the measuring system, in particular in the chamber (11*), and become mechanically fixed to it, but so that it can still be detached again, that is to say, in particular, forming a vibration-type measuring transducer or vibronic measuring system and/or in such a way that the vibronic module (M2) is locked in the basic module (M1) or cannot move;
- **wherein** the measuring system electronics (ME) are configured, in a measuring mode when the vibronic module (M2) is present in the chamber (11*), to feed a measurement driver signal causing the vibronic module (M2) to vibrate into the first electric coil (12) as well as to detect an electrical measurement voltage from the second electric coil (14) induced in the second electric coil (14) by vibrations of the vibronic module (M2) and to analyze it, in particular to determine measured values for the at least one measured variable,
- **characterized in that** the measuring system electronics (ME) are configured, in a test mode, in particular preceding and/or following the measuring mode, when the vibronic module (M2) is not present in the chamber (11*) - in particular also when other portable magnetic-field-generating devices are not present, that is to say devices not associated with the basic module (M1) - to perform a check, in particular a calibration, preferably a recalibration, of the basic module (M1) and/or the measuring system electronics (ME), that is to say, when the vibronic module (M2) is not present, to feed both a test driver signal, in particular a first test driver signal, into the first electric coil (12) as well as to detect an electrical test voltage from the second electric coil (14), in particular inductively coupled from the first electric coil (13) into the second electric coil (14), and to analyze it, in particular to compare at least one parameter of the test voltage, in particular an amplitude and/or a frequency and/or a phase angle and/or a measured value for an inductance, with a reference value determined in advance and/or with a specified threshold value.

2. The Coriolis mass flow meter as claimed in the preceding claim,
- **wherein** the measuring system electronics are configured to feed electrical power into the first electric coil, using an electric measuring system test driver signal and/or the test driver signal, in particular the first test driver signal, and preferably with an impressed alternating current.

3. The Coriolis mass flow meter as claimed in one of the preceding claims,
- **wherein** the measuring system electronics (ME) are configured to feed the test driver signal, in particular the first test driver signal, with at least two different frequencies, in particular with a resonant frequency of the housing (11), a nominal resonant frequency of the vibronic module (M2) and/or a mains frequency.

4. The Coriolis mass flow meter as claimed in one of the preceding claims,
- **wherein** the measuring system electronics (ME) are also configured to feed electrical power into the second electric coil (14), in test mode using a second electric test driver signal, in particular with an impressed alternating current.

5. The Coriolis mass flow meter as claimed in the preceding claims,
- **wherein** the measuring system electronics (ME) are also configured, in test mode, to detect an electrical test voltage inductively coupled into the first electric coil (12) by means of the second coil (14) or induced in the first electric coil (12) and to analyze it, that is to say, in particular, to determine at least one parameter of the test voltage using the test voltage, in particular an amplitude and/or a frequency and/or a phase angle and/or a measured value for an inductance and to compare it with a reference value determined in advance and/or with a specified threshold value.

6. The Coriolis mass flow meter as claimed in one of the preceding claims,
- **wherein** the measuring system electronics are configured to determine an inductance, in particular of the first electric coil, based on the test voltage, that is to say, in particular, to compare the determined inductance with a reference value established in advance, in particular an inductance reference value, and/or with one or more threshold values specified for this purpose; and/or
- **wherein** the measuring system electronics are configured to determine, in particular digital, measured values for at least one parameter of the test voltage, in particular an amplitude, a frequency and/or a phase angle, based on the test voltage, that is to say, in particular, to compare the measured values with a reference value established in advance and/or with one of more threshold values specified for this purpose.

7. The Coriolis mass flow meter as claimed in one of the preceding claims,
- **wherein** the basic module (M1) has at least one third electric coil (16), in particular positioned inside the chamber (11*) of the housing (11), in particular a cylindrical one and/or one configured as an air coil and/or one that has an identical design to the second electric coil (12), which is in particular positioned at a distance from the second electric coil, in particular which is mechanically connected, at least indirectly, to the housing wall (11+); and
- **wherein** the third electric coil (16) is electrically connected to the measuring system electronics (ME).

8. The Coriolis mass flow meter as claimed in the preceding claim,
- **wherein** the measuring system electronics are configured to feed electrical power into the third electric coil, using a third electric test driver signal, in particular with an impressed alternating current.

9. The Coriolis mass flow meter as claimed in claim 7 or 8,
- **wherein** the measuring system electronics (ME) are configured to detect an electrical test voltage, in particular inductively coupled into the third electric coil (16) or induced in the third electric coil (16) by means of the first electric coil (12) and/or the second electric coil (14), and to analyze it, that is to say, in particular, using the test voltage for at least one parameter of the test voltage, in particular to determine an amplitude and/or a frequency and/or a phase angle and/or an inductance.

10. The Coriolis mass flow meter as claimed in one of claims 7 to 9,
- **wherein** the measuring system electronics (ME) are configured to detect an electrical test voltage from the first electric coil (12) and/or the second electric coil (14), in particular inductively coupled into the first electric coil (12) and/or the second electric coil (14) by means of the third electric coil (16) or induced in the first electric coil (16) and/or the second electric coil (14), and to analyze it, that is to say, in particular, using the test voltage for at least one parameter of the test voltage, in particular to determine an amplitude and/or a frequency and/or a phase angle and/or an inductance.

11. The Coriolis mass flow meter as claimed in claim 7,
- **wherein** the measuring system electronics (ME) are configured to detect electrical test voltages, in particular inductively coupled into the second electric coil (14) and the third electric coil (16) by means of the first electric coil (12) or induced in the second electric coil (14) and in the third electric coil (16), and to analyze them, that is to say, in particular, using the test voltages for at least one parameter of the test voltages, in particular to determine an amplitude and/or a frequency and/or a phase angle and/or an inductance and/or a phase difference between the test voltage detected at the second coil (14) and the test voltage detected at the third coil (16).

12. The Coriolis mass flow meter as claimed in one of the preceding claims,
- **wherein** the measuring system electronics (ME) are configured to supply the first electric test driver signal, the second electric test driver signal and/or the third electric test driver signal with a signal frequency corresponding to a mechanical resonant frequency, in particular to a first mechanical resonant frequency and/or second mechanical resonant frequency, of the vibronic module.

13. The Coriolis mass flow meter as claimed in one of the preceding claims,
- **wherein** the vibronic module (M2) has at least one, in particular cylindrical, first permanent magnet (22),
- **wherein** the vibronic module (M2) is configured to be installed in the basic module (M1) in such a way that its first permanent magnet (22) is positioned inside the chamber, but at a distance from the housing wall, that is to say, in particular, is held in particular in a first installation position where an alignment and/or a minimum distance relative to the first electric coil (12) is/are specified and/or which corresponds to the static installation position and/or in such a way that an imaginary longitudinal axis of the first permanent magnet and an imaginary longitudinal axis of the first electric coil (12) are flush with each other or run parallel with each other when extended.

14. The Coriolis mass flow meter as claimed in one of claims 7 to 13,
- **wherein** the third electric coil (16) is part of the measuring system electronics (ME).

15. The Coriolis mass flow meter as claimed in one of claims 7 to 14,
- **wherein** the third electric coil is designed so that it can be moved in space.

16. The Coriolis mass flow meter as claimed in one of the preceding claims,
- **wherein** the measuring system electronics (ME) are configured to determine and analyze measured values for a coil current or variables dependent thereon, in particular to compare one or more measured values for the coil current or variables dependent thereon with a reference value established in advance, in particular a coil current reference value, and/or with one of more threshold values specified for this purpose, in particular coil current threshold values.

17. The Coriolis mass flow meter as claimed in one of the preceding claims,
- **wherein** the measuring system electronics (ME) are configured to determine and analyze measured values for a signal strength of the test driver signal, in particular the first, second and/or third test driver signal, in particular to compare one or more measured values for the signal strength of the test driver signal, in particular the first, second and/or third test driver signal, with a reference value established in advance, in particular a signal strength reference value, and/or one or more threshold values specified for this purpose, in particular signal strength threshold values.

18. The Coriolis mass flow meter as claimed in one of the preceding claims,
- **wherein** the measuring system electronics (ME) are configured to determine and analyze the signal curve of the driver signal over time.

19. The Coriolis mass flow meter as claimed in one of the preceding claims,
- **wherein** the measuring system electronics (ME) are configured, during test mode when a vibronic module (M2) is not present in the chamber (11*), in particular also when other portable magnet-field-generating devices are not present, that is to say devices not associated with the basic module (M1), to perform the test, to feed both the test driver signal, in particular the test driver signal, in particular the first test driver signal, into the first electric coil (12) and to detect the electrical test voltage from the second electric coil (14), in particular inductively coupled from the first electric coil (13) into the second electric coil (14), and to analyze it, in particular to compare the at least one parameter of the test voltage, in particular the amplitude and/or the frequency and/or the phase angle and/or the measured value for inductance, with the reference value established in advance and/or with the specified threshold value.

20. A method for commissioning and/or testing a modular Coriolis mass flow meter, comprising:
- A basic module (M1) as claimed in claim 1;
- measuring system electronics (ME) as claimed in claim 1;
- and a vibronic module, in particular a vibronic module as claimed in claim 13;
said method comprising:
- Checking or calibrating the basic module (M1) and/or the measuring system electronics (ME) during a test mode, using the measuring system electronics when the vibronic module (M2) is not present in the chamber (11*), in particular also when other portable magnetic-field-generating devices are not present, that is to say devices not associated with the basic module (M1), in particular by feeding a driver signal, in particular a first driver signal, into the first electric coil (12) and by detecting and analyzing an electrical voltage from the second electric coil (14), in particular inductively coupled from the first electric coil (13) into the second electric coil (14), in particular by comparing at least one voltage parameter, in particular an amplitude and/or a frequency and/or a phase angle and/or a measured value for self-inductance, with a reference value determined in advance and/or with a specified threshold value;
- inserting a vibronic module (M2), in particular a vibronic module as claimed in claim 13, into the basic module (M1) to form a vibration-type measuring transducer or the vibronic measuring system; and
- determining measured values for the at least one measured variable during measuring mode, by feeding a driver signal into the first electric coil (12) in order to cause the vibronic module (M2) to vibrate and detecting an electrical voltage from the second electric coil (14) induced in the second electric coil (14) by vibrations of the vibronic module (M2).

## Revendications

1. Débitmètre massique Coriolis modulaire, destiné à la mesure d'une grandeur d'un produit fluide, ledit système de mesure comprenant :
- une électronique de système de mesure (ME)
- un module de base (M1), lequel module de base (M1) comprend :
-- un boîtier (11), notamment un boîtier de protection, comportant au moins une chambre (11*) au moins partiellement entourée par une paroi de boîtier (11+),
-- au moins une première bobine électrique (12) placée notamment à l'intérieur de la chambre (11*) du boîtier (11), laquelle première bobine électrique est notamment de forme cylindrique et/ou conçue comme une bobine à air, laquelle première bobine électrique est reliée mécaniquement, au moins indirectement, à la paroi de boîtier (11+) et raccordée électriquement à l'électronique de système de mesure (ME), et
-- au moins une deuxième bobine électrique (14) placée notamment à l'intérieur de la chambre (11*) du boîtier (11), laquelle deuxième bobine électrique est notamment de forme cylindrique et/ou conçue comme une bobine d'air et/ou de construction identique à la première bobine électrique (12), laquelle deuxième bobine électrique est notamment positionnée à distance de la première bobine électrique et reliée mécaniquement, au moins indirectement, à la paroi de boîtier (11+), laquelle bobine est reliée électriquement au système électronique de mesure (ME) ;
- **pour lequel** le module de base (M1) est conçu pour recevoir un module vibronique (M2) du système de mesure, notamment dans la chambre (11*), de sorte que ledit module de base est relié audit module vibronique de manière mécaniquement fixe, mais néanmoins amovible, notamment en formant un capteur de mesure de type à vibration ou un système de mesure vibronique et/ou de telle sorte que le module vibronique (M2) soit bloqué dans le module de base (M1) ou ne puisse pas se déplacer ;
- **pour lequel** l'électronique du système de mesure (ME) est conçue pour, dans un mode de mesure en présence du module vibronique (M2) dans la chambre (11*), injecter dans la première bobine électrique (12) un signal de commande de mesure servant à exciter les vibrations du module vibronique (M2), ainsi que pour détecter et analyser une tension électrique de mesure induite dans la deuxième bobine électrique (14) par les vibrations du module vibronique (M2), et notamment pour déterminer des valeurs mesurées pour l'au moins une grandeur mesurée,
- **caractérisé en ce que** l'électronique de système de mesure (ME) est conçue, dans un mode de test précédant et/ou suivant notamment le mode de mesure, en l'absence du module vibronique (M2) dans la chambre (11*) - notamment également en l'absence d'autres dispositifs mobiles générateurs de champs magnétiques, c'est-à-dire n'appartenant pas au module de base (M1) - pour effectuer une vérification, notamment un étalonnage, de préférence un réétalonnage, du module de base (M1) et/ou de l'électronique de système de mesure (ME), à savoir en l'absence du module vibronique (M2), pour injecter un signal de commande de test, notamment un premier signal de commande de test, dans la première bobine électrique (12) et pour détecter et évaluer une tension de test électrique, laquelle tension de test est couplée notamment par induction de la première bobine électrique (13) vers la deuxième bobine électrique (14), notamment au moins un paramètre de la tension de test, notamment une amplitude et/ou une fréquence et/ou un angle de phase et/ou une valeur mesurée d'une inductance, et pour comparer ledit paramètre à une valeur de référence déterminée au préalable et/ou à une valeur seuil prédéfinie.

2. Débitmèt**re** massique Coriolis selon la revendication précédente,
- **pour lequel** l'électronique de système de mesure (ME) est conçue pour injecter de l'énergie électrique dans la première bobine électrique au moyen d'un signal de commande électrique du système de mesure et/ou du signal de commande de test, notamment du premier signal de commande de test, et de préférence avec un courant alternatif modulé.

3. Débitmèt**re** massique Coriolis selon l'une des revendications précédentes,
- **pour lequel** l'électronique de système de mesure (ME) est conçue pour injecter le signal de commande de test, notamment le premier signal de commande de test, à au moins deux fréquences différentes, notamment à une fréquence de résonance du boîtier (11), à une fréquence de résonance nominale du module vibronique (M2) et/ou à une fréquence du réseau.

4. Débitmètre massique Coriolis selon l'une des revendications précédentes,
- **pour lequel** l'électronique de système de mesure (ME) est également conçue pour, en mode test, injecter de l'énergie électrique dans la deuxième bobine électrique (14) au moyen d'un deuxième signal de commande de test électrique, notamment un courant alternatif modulé.

5. Débitmèt**re** massique Coriolis selon l'une des revendications précédentes,
- **pour lequel** l'électronique de système de mesure (ME) est également conçue pour, en mode de test, mesurer et analyser une tension de test électrique, notamment couplée par induction dans la première bobine électrique (12) au moyen de la deuxième bobine (14) ou induite dans la première bobine électrique (12), notamment pour déterminer, à l'aide de cette tension de test, au moins un paramètre de ladite tension de test, notamment une amplitude et/ou une fréquence et/ou un angle de phase et/ou une valeur mesurée d'une inductance, et de la comparer à une valeur de référence déterminée au préalable et/ou à une valeur seuil prédéfinie.

6. Débitmèt**re** massique Coriolis selon l'une des revendications précédentes,
- **pour lequel** l'électronique de système de mesure est conçue pour déterminer, à partir de la tension de test, une inductance, notamment l'inductance de la première bobine électrique, notamment pour comparer l'inductance déterminée à une valeur de référence déterminée au préalable, notamment une valeur de référence d'inductance, et/ou à une ou plusieurs valeurs seuils prédéfinies à cet effet ; et/ou
- **pour lequel** l'électronique de système de mesure est conçue pour déterminer, à partir de la tension de test, des valeurs mesurées, notamment numériques, pour au moins un paramètre de la tension de test, notamment une amplitude, une fréquence et/ou un angle de phase, notamment pour comparer les valeurs mesurées à une valeur de référence déterminée au préalable et/ou à une ou plusieurs valeurs seuils prédéfinies à cet effet.

7. Débitmèt**re** massique Coriolis selon l'une des revendications précédentes,
- **pour lequel** le module de base (M1) comporte au moins une troisième bobine électrique, notamment placée à l'intérieur de la chambre (11*) du boîtier (11), notamment cylindrique et/ou conçue comme une bobine à air et/ou de construction identique à la deuxième bobine électrique (12), laquelle troisième bobine est notamment positionnée à distance de la deuxième bobine électrique, reliée mécaniquement, au moins indirectement, à la paroi du boîtier (11+) ; et
- **pour lequel** la troisième bobine électrique (16) est raccordée électriquement à l'électronique de système de mesure (ME).

8. Débitmèt**re** massique Coriolis selon la revendication précédente,
- **pour lequel** l'électronique de système de mesure est conçue pour injecter de l'énergie électrique dans la troisième bobine électrique au moyen d'un troisième signal électrique de commande de test, notamment un courant alternatif imposé.

9. Débitmèt**re** massique Coriolis selon la revendication 7 ou 8,
- **pour lequel** l'électronique de système de mesure (ME) est conçue pour mesurer et analyser une tension de test électrique, notamment couplée de manière inductive dans la troisième bobine électrique (16) au moyen de la première bobine électrique (12) et/ou de la deuxième bobine électrique (14), ou laquelle tension est induite dans la troisième bobine électrique (16), notamment en utilisant cette tension de test pour déterminer au moins un paramètre de ladite tension de test, notamment une amplitude et/ou une fréquence et/ou un angle de phase et/ou une inductance.

10. Débitmèt**re** massique Coriolis selon l'une des revendications 7 à 9,
- **pour lequel** l'électronique de système de mesure (ME) est conçue pour mesurer et analyser une tension de test électrique provenant de la première bobine électrique (12) et/ou de la deuxième bobine électrique (14), laquelle tension est couplée de manière inductive, notamment au moyen de la troisième bobine électrique (16), dans la première bobine électrique (12) et/ou la deuxième bobine électrique (14), ou laquelle tension est induite dans la première bobine électrique (16) et/ou la deuxième bobine électrique (14), notamment en utilisant la tension de test pour déterminer au moins un paramètre de ladite tension de test, notamment une amplitude et/ou une fréquence et/ou un angle de phase et/ou une inductance.

11. Débitmètre massique Coriolis selon la revendication 7,
- **pour lequel** l'électronique de système de mesure (ME) est conçue pour mesurer et analyser des tensions de test électriques, notamment les tensions de test couplées par induction dans la deuxième bobine électrique (14) et dans la troisième bobine électrique (16) au moyen de la première bobine électrique (12), ou les tensions de test induites dans la deuxième bobine électrique (14) et dans la troisième bobine électrique (16), notamment en utilisant les tensions de test pour déterminer au moins un paramètre desdites tensions de test, notamment pour déterminer respectivement une amplitude et/ou une fréquence et/ou un angle de phase et/ou une inductance et/ou une différence de phase entre la tension de test mesurée au niveau de la deuxième bobine (14) et la tension de test mesurée au niveau de la troisième bobine (16).

12. Débitmèt**re** massique Coriolis selon l'une des revendications précédentes,
- **pour lequel** l'électronique de système de mesure (ME) est conçue pour fournir le premier signal électrique de commande de test, le deuxième signal électrique de commande de test et/ou le troisième signal électrique de commande de test à une fréquence correspondant à une fréquence de résonance mécanique, notamment à une première fréquence de résonance mécanique et/ou à une deuxième fréquence de résonance mécanique, du module vibronique.

13. Débitmètre massique Coriolis selon l'une des revendications précédentes,
- **pour lequel** le module vibronique (M2) comporte au moins un premier aimant permanent (22), notamment cylindrique,
- **pour lequel** le module vibronique (M2) est conçu pour être monté dans le module de base (M1) de telle sorte que son premier aimant permanent (22) soit placé à l'intérieur de la chambre tout en étant espacé de la paroi du boîtier, notamment dans une position prédéfinie en ce qui concerne l'orientation et/ou la distance minimale par rapport à la première bobine électrique (12) et/ou maintenu dans la position de montage statique, notamment la première position de montage, et/ou de telle sorte qu'un axe longitudinal imaginaire du premier aimant permanent et un axe longitudinal imaginaire de la première bobine électrique (12) soient alignés l'un avec l'autre ou s'étendent parallèlement l'un à l'autre dans leur prolongement.

14. Débitmètre massique Coriolis selon l'une des revendications 7 à 13,
- **pour lequel** la troisième bobine électrique (16) fait partie de l'électronique de système de mesure (ME).

15. Débitmèt**re** massique Coriolis selon l'une des revendications 7 à 14,
- **pour lequel** la troisième bobine électrique (16) est conçue de manière à pouvoir être déplacée dans l'espace.

16. Débitmèt**re** massique Coriolis selon l'une des revendications précédentes,
- **pour lequel** l'électronique de système de mesure (ME) est conçue pour déterminer et analyser des valeurs mesurées relatives au courant de bobine ou à des grandeurs qui en dépendent, notamment pour comparer une ou plusieurs valeurs mesurées relatives au courant de bobine ou à des grandeurs qui en dépendent à une valeur de référence déterminée au préalable, notamment une valeur de référence du courant de bobine, et/ou à une ou plusieurs valeurs seuils prédéfinies à cet effet, notamment des valeurs seuils du courant de bobine.

17. Débitmèt**re** massique Coriolis selon l'une des revendications précédentes,
- **pour lequel** l'électronique de système de mesure (ME) est conçue pour déterminer et analyser des valeurs mesurées relatives à l'intensité du signal de commande de test, notamment du premier, du deuxième et/ou du troisième signal de commande de test, notamment pour comparer une ou plusieurs valeurs mesurées relatives à l'intensité du signal de commande de test, notamment du premier, du deuxième et/ou du troisième signal de commande de test, à une valeur de référence déterminée au préalable, notamment une valeur de référence d'intensité de signal, et/ou à une ou plusieurs valeurs seuils prédéfinies à cet effet, notamment des valeurs seuils d'intensité de signal.

18. Débitmèt**re** massique Coriolis selon l'une des revendications précédentes,
- **pour lequel** l'électronique de système de mesure (ME) est conçue pour déterminer et analyser l'évolution dans le temps du signal de commande.

19. Débitmètre massique Coriolis selon l'une des revendications précédentes,
- **pour lequel** l'électronique de système de mesure (ME) est conçue pour effectuer - en mode test, en l'absence d'un module vibronique (M2) dans la chambre (11*), notamment également en l'absence d'autres dispositifs mobiles générateurs de champs magnétiques, c'est-à-dire ne faisant pas partie du module de base (M1) - la vérification, à la fois en injectant le signal de commande de test, notamment le premier signal de commande de test, dans la première bobine électrique (12) et en mesurant et en évaluant la tension de test électrique provenant de la deuxième bobine électrique (14), notamment au moins un paramètre de la tension de test, notamment l'amplitude et/ou la fréquence et/ou l'angle de phase et/ou la valeur mesurée de l'inductance, et de comparer ladite tension de test à la valeur de référence déterminée au préalable et/ou à la valeur seuil prédéfinie.

20. Procédé destiné à la mise en service et/ou au test d'un débitmètre massique Coriolis, lequel procédé comprend :
- un module de base (M1) selon la revendication 1 ;
- une électronique de système de mesure (ME) selon la revendication 1 ;
- ainsi qu'un module vibronique, notamment un module vibronique selon la revendication 13 ;
lequel procédé comprend les étapes suivantes :
- Test ou étalonnage du module de base (M1) et/ou de l'électronique de système de mesure (ME) pendant un mode test, à l'aide de l'électronique de système de mesure en l'absence du module vibronique (M2) dans la chambre (11*), notamment également en l'absence d'autres dispositifs mobiles générateurs de champs magnétiques, c'est-à-dire ne faisant pas partie du module de base (M1), notamment par injection d'un signal de commande, notamment d'un premier signal de commande, dans la première bobine électrique (12) et par la mesure et l'évaluation d'une tension électrique, couplée notamment par induction de la première bobine électrique (13) vers la deuxième bobine électrique (14), provenant de la deuxième bobine électrique (14), notamment en comparant au moins un paramètre de cette tension, notamment une amplitude et/ou une fréquence et/ou un angle de phase et/ou une valeur mesurée de l'auto-inductance, à une valeur de référence déterminée au préalable et/ou à une valeur seuil prédéfinie ;
- Insertion d'un module vibronique (M2), notamment d'un module vibronique selon la revendication 13, dans le module de base (M1) afin de former un capteur du type à vibrations ou le système de mesure vibronique ; et
- Détermination de valeurs mesurées pour l'au moins une grandeur mesurée pendant le mode de mesure, en injectant un signal de commande dans la première bobine électrique (12) afin de provoquer des vibrations du module vibronique (M2) et en détectant une tension électrique induite par les vibrations du module vibronique (M2) dans la deuxième bobine électrique (14) à partir de la deuxième bobine électrique (14).
